# EUROPEAN PATENT APPLICATION

(11) **EP 4 831 806 A1**
(43) Date of publication of application: **28.10.2026**
(21) Application number: 25891173.4
(22) Date of filing: 05.11.2025
(51) Int. Cl.: G06F 9/48

(54) **METHOD FOR QUICKLY LAUNCHING APPLICATION, AND ELECTRONIC DEVICE**

(30) Priority: 14.11.2024 CN 202411632703
(71) Applicant: Huawei Technologies Co., Ltd., Shenzhen, Guangdong 518129 (CN)
(72) Inventor: DENG, Kaifeng, Shenzhen, Guangdong 518129 (CN); LUO, Yibin, Shenzhen, Guangdong 518129 (CN); ZHANG, Li, Shenzhen, Guangdong 518129 (CN); CAI, Xiaoge, Shenzhen, Guangdong 518129 (CN); CAI, Weigang, Shenzhen, Guangdong 518129 (CN); WANG, Lirui, Shenzhen, Guangdong 518129 (CN)
(74) Representative: Gill Jennings & Every LLP
(86) International application number: PCT/CN2025/132667
(87) International publication number: WO 2026/103583

(57) **Abstract**

This application provides a method for quickly starting an application, and an electronic device, which relate to the field of electronic technologies. The method includes: The electronic device detects a touch operation of a user and continuously captures a fingerprint image of the user. The electronic device performs identity verification and determines a fingerprint gesture of the user, based on the continuously captured fingerprint image. The electronic device starts, based on the fingerprint gesture, a first application corresponding to the fingerprint gesture. This application can simplify an operation procedure of starting an application.

## Description

This application claims priority to Chinese Patent Application No. 202411632703.6, filed with the China National Intellectual Property Administration on November 14, 2024 and entitled "METHOD FOR QUICKLY STARTING APPLICATION, AND ELECTRONIC DEVICE", which is incorporated herein by reference in its entirety.

### TECHNICAL FIELD

This application relates to the field of electronic technologies, and in particular, to a method for quickly starting an application, and an electronic device.

### BACKGROUND

With increasing intelligence of electronic devices, functions that the electronic devices can implement become richer and more diverse, but correspondingly, user operations required to use these functions are increasingly complex. For example, a large quantity of applications are pre-installed on an electronic device of a user. To start a specific application to use a specific function of the application, the user needs to follow a time-consuming process: unlocking the electronic device, searching an application list of the electronic device for an icon of the desired application, starting the application, and selecting and using the corresponding function of the application.

To simplify complex operations, different types of shortcut interaction methods are developed in the conventional technologies. However, these methods still suffer from limitations such as insufficient simplicity, lack of flexibility, and potential information security risks. How to implement a simpler, more flexible, and more secure shortcut operation is a problem to be urgently resolved.

### SUMMARY

A method for quickly starting an application, and an electronic device that are provided in this application enable an application to be quickly started by using a fingerprint gesture, to display an application interface. This enhances security, accuracy, and convenience of starting the application, thereby improving user experience.

To simplify operations of starting the application, this application provides the following technical solutions.

According to a first aspect, this application provides a method for quickly starting an application, applied to an electronic device. The electronic device includes a fingerprint recognition apparatus. The method includes: The electronic device detects a touch operation of a user and continuously captures a fingerprint image of the user. The electronic device performs identity verification and determines a fingerprint gesture of the user, based on the continuously captured fingerprint image. The electronic device starts, based on the fingerprint gesture, a first application corresponding to the fingerprint gesture. This can ensure security of an application start process through fingerprint verification, and effectively reduce a probability of an accidental touch by identifying whether a fingerprint gesture is a preset gesture, so that the user starts a corresponding application by using the fingerprint gesture, thereby implementing one-step fingerprint authentication and application start, and simplifying an operation procedure.

In a possible implementation, the fingerprint image includes a first fingerprint image and a second fingerprint image; and that the electronic device performs identity verification and determines the fingerprint gesture of the user, based on the continuously captured fingerprint image includes: The electronic device performs identity verification on the user based on the first fingerprint image, and determines, based on the first fingerprint image and the second fingerprint image, that the fingerprint gesture is a dual-touch gesture.

In a possible implementation, the first fingerprint image includes a 1^{st} frame of image of a 1^{st} frame of fingerprint image; and that the electronic device performs identity verification on the user based on the first fingerprint image includes: The electronic device performs identity verification on the user based on the 1^{st} frame of image of the 1^{st} frame of fingerprint image.

In a possible implementation, in a process of performing identity verification on the user based on the 1^{st} frame of fingerprint image, the electronic device continuously captures the first fingerprint image and the second fingerprint image. This can improve efficiency of starting an application by using the fingerprint gesture, reduce a sense of freezing present when the user opens a shortcut function of the application by using the fingerprint gesture, and improve user experience.

In a possible implementation, after determining the fingerprint gesture of the user, the electronic device performs identity verification on the user based on the 1^{st} frame of fingerprint image.

In a possible implementation, that the electronic device determines, based on the first fingerprint image and the second fingerprint image, that the fingerprint gesture is the dual-touch gesture includes: The electronic device determines, based on duration of the first fingerprint image, duration of the second fingerprint image, and a time interval between the first fingerprint image and the second fingerprint image, that the fingerprint gesture is the dual-touch gesture.

In a possible implementation, that the electronic device determines, based on the duration of the first fingerprint image, the duration of the second fingerprint image, and the time interval between the first fingerprint image and the second fingerprint image, that the fingerprint gesture is the dual-touch gesture includes: determining, based on the duration of the first fingerprint image and the duration of the second fingerprint image being separately less than first preset duration, and the time interval between the first fingerprint image and the second fingerprint image being less than second preset duration, that the fingerprint gesture is the dual-touch gesture.

In a possible implementation, the fingerprint gesture includes any one of a dual-touch gesture, a slide gesture, and a touch-and-hold gesture.

In a possible implementation, in a screen-locked case, the electronic device unlocks a screen of the electronic device after identity verification performed based on the first fingerprint image succeeds.

In a possible implementation, the fingerprint recognition apparatus is disposed on a side surface of the electronic device.

In a possible implementation, the method further includes: The electronic device receives a first operation of the user, and enables a fingerprint gesture function based on the first operation.

In a possible implementation, the method further includes: The electronic device receives a second operation of the user, and disables the fingerprint gesture function based on the second operation.

In a possible implementation, the method further includes: The electronic device displays a setting interface of the fingerprint gesture function, where the setting interface of the fingerprint gesture function includes an application list. The electronic device receives a third operation performed by the user on the application list to select the first application, and determines, from the application list in response to the third operation of the user, the first application corresponding to the fingerprint gesture.

In a possible implementation, the first application includes any one of the following applications: WeChat, WeChat Payment Code, WeChat Transit Code, Alipay, Alipay Payment Code, Alipay Transit Code, Xiaoyi Vision, Xiaoyi Screen Recognition, Flashlight, Camera, Sound Mode, Recorder, Super Privacy, TikTok, Dianping, Bilibili, QQ, DingTalk, DingTalk Check-in, WeCom, and WeCom Check-in.

According to a second aspect, this application provides an electronic device, including one or more processors and one or more memories, where the one or more memories are coupled to the one or more processors, the one or more memories are configured to store computer program code, the computer program code includes computer instructions, and when the one or more processors execute the computer instructions, the electronic device is enabled to perform the method for quickly starting an application according to any possible implementation of the foregoing aspect.

According to a third aspect, an embodiment of this application provides a computer storage medium, where the computer storage medium stores instructions, and when the instructions are run on an electronic device, the electronic device is enabled to perform the method for quickly starting an application according to any possible implementation of any one of the foregoing aspects.

According to a fourth aspect, an embodiment of this application provides a computer program product including instructions, where when the computer program product runs on an electronic device, the electronic device is enabled to perform the method for quickly starting an application according to any possible implementation of any one of the foregoing aspects.

In embodiments of this application, fingerprint-based identity verification is performed on the user, and the fingerprint gesture is determined based on the touch operation of the user, to quickly start the application corresponding to the fingerprint gesture. This ensures security and convenience of quickly starting the application, effectively reduces a probability of an accidental touch, and improves accuracy of a user operation, so that the user can start the corresponding application by using the fingerprint gesture, thereby implementing one-step fingerprint authentication and application start, simplifying an operation process, and improving user experience.

### BRIEF DESCRIPTION OF DRAWINGS

To describe the technical solutions in embodiments of this application or in the conventional technologies more clearly, the following briefly describes the accompanying drawings for describing embodiments or the conventional technologies. It is clear that the accompanying drawings in the following descriptions show some embodiments of this application, and a person of ordinary skill in the art may still derive other drawings from these accompanying drawings without creative efforts.
FIG. 1 is a diagram of a structure of an electronic device 100 according to an embodiment of this application;
FIG. 2 is a block diagram of a software structure of an electronic device 100 according to an embodiment of this application;
FIG. 3A is a diagram of a fingerprint gesture setting interface of a function of quickly starting an application according to an embodiment of this application;
FIG. 3B is a diagram of a fingerprint gesture setting interface according to an embodiment of this application;
FIG. 3C is a diagram of a fingerprint setting interface of a function of quickly starting an application according to an embodiment of this application;
FIG. 3D is a diagram of a setting interface of applications corresponding to fingerprints according to another embodiment of this application;
FIG. 4A and FIG. 4B are diagrams of a process in which a fingerprint sensor processes a touch operation according to an embodiment of this application;
FIG. 5 shows a method for quickly starting an application according to an embodiment of this application;
FIG. 6 shows a method for quickly starting an application according to another embodiment of this application;
FIG. 7A to FIG. 7D are diagrams of a display interface of an electronic device during quick start of an application according to an embodiment of this application;
FIG. 8A to FIG. 8J are diagrams of display interfaces of an electronic device according to an embodiment of this application;
FIG. 9A to FIG. 9D are diagrams of setting interfaces according to an embodiment of this application;
FIG. 10 is a diagram of a prompt interface for setting a fingerprint button shortcut function according to an embodiment of this application; and
FIG. 11 shows a front view and a side view of an electronic device according to an embodiment of this application.

### DESCRIPTION OF EMBODIMENTS

Various example embodiments of this application are described in detail with reference to the accompanying drawings. The descriptions of the example embodiments are merely illustrative, and do not constitute any limitation on this application and application or use thereof. This application may be implemented in different forms, and is not limited to the embodiments described herein. These embodiments are provided to make this application thorough and complete, and to fully express the scope of this application to a person skilled in the art. It should be noted that, unless otherwise specifically stated, relative arrangement of components and steps, compositions of materials, numerical expressions, and numerical values described in these embodiments should be construed as being merely an example but not limiting.

"First", "second", and similar words used in this application do not indicate any order, quantity, or importance, but are used only for distinguishing between different components. Words such as "include" or "contain" mean that an element before the word covers an element enumerated after the word, and does not exclude a possibility that another element is also covered. "On", "below", or the like is only used to represent a relative location relationship. When an absolute location of a described object changes, the relative location relationship may also change correspondingly.

In this application, "at least one" and "one or more" may be considered to have a same meaning.

In this application, when a specific component is located between a first component and a second component, there may be an intermediate component between the specific component and the first component or the second component, or there may be no intermediate component between the specific component and the first component or the second component. When a specific component is connected to another component, the specific component may be directly connected to the another component without an intermediate component, or may be connected to the another component through an intermediate component.

Unless otherwise specifically defined, all terms (including technical terms or scientific terms) used in this application have the same meanings as those understood by a person of ordinary skill in the art to which this application belongs. It should also be understood that terms defined in, for example, general dictionaries should be interpreted as having meanings consistent with their meanings in the context of the related technology, rather than being interpreted with idealized or highly formalized meanings, unless expressly defined here.

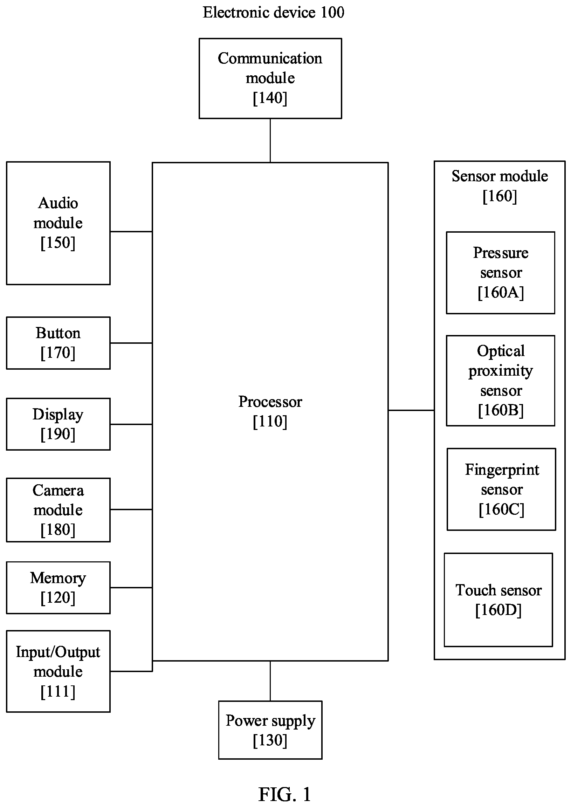

A method for starting an application by using a fingerprint gesture provided in an embodiment of this application may be applied to an electronic device. The electronic device includes a fingerprint recognition apparatus. The following first describes an electronic device in this application with reference to FIG. 1.

FIG. 1 is a diagram of a structure of an electronic device 100 according to an embodiment of this application.

In some embodiments, as shown in FIG. 1, the electronic device 100 may include at least one of a mobile phone, a foldable electronic device, a tablet computer, a desktop computer, a laptop computer, a handheld computer, a notebook computer, an ultra-mobile personal computer, a netbook, a cellular phone, a PDA, an AR device, a VR device, an artificial intelligence device, a wearable device, a vehicle-mounted device, a smart home device, a smart city device, and the like. A type of the electronic device 100 is not specially limited in embodiments of this application.

The electronic device 100 may include a processor 110, a memory 120, a power supply 130, a communication module 140, an audio module 150, a sensor module 160, a button 170, a camera module 180, a display 190, an input/output module 111, and the like. The sensor module 160 may include a pressure sensor 160A, an optical proximity sensor 160B, a fingerprint sensor 160C, a touch sensor 160D, an ambient light sensor 160E, a bone conduction sensor 160F, and the like.

The structure shown in this embodiment of this application does not constitute a limitation on the electronic device 100. In some other embodiments of this application, the electronic device 100 may include more or fewer components than those shown in the figure. The components shown in the figure may be implemented by hardware, software, or a combination of software and hardware.

The processor 110 may include one or more processing units. For example, the processor 110 may include an application processor, a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural-network processing unit, NPU), and/or the like. Different processing units may be independent components, or may be integrated into one or more processors.

The processor 110 may generate an operation control signal based on instruction operation code and a timing signal, to complete control on instruction fetching and instruction execution.

A memory may be further disposed in the processor 110, and is configured to store instructions and data. In some embodiments, the memory in the processor 101 may be a cache. The memory may store instructions or data just used or frequently used by the processor 110.

In some embodiments, the processor 110 may include one or more interfaces. The interface may include an inter-integrated circuit I2C interface, an I2S interface, a PCM interface, a UART interface, an MIPI, a GPIO interface, a SIM interface, and/or a USB interface. The processor 110 may be connected to a module like the sensor module 160, the audio module 150, the communication module 140, the display 190, or the camera module 180 through at least one of the foregoing interfaces.

It may be understood that an interface connection relationship between the modules shown in this embodiment of this application is merely an example for description, and does not constitute a limitation on the electronic device 100. In some other embodiments of this application, the electronic device 100 may alternatively use an interface connection manner different from that in the foregoing embodiment, or use a combination of a plurality of interface connection manners.

The power supply 130 is configured to supply power to the processor 110, the memory 120, the display 190, the camera module 180, and the like.

The electronic device 100 may implement a wired or wireless communication function by using the communication module 140. For example, the communication module 140 may provide a wireless communication solution that is applied to the electronic device 100 and that includes at least one of 2G, 3G, 4G, 5G, or 6G. The communication module 140 may provide a wireless local area network module, a Bluetooth module, a BLE module, an ultra-wideband (ultra-wideband, UWB) module, a global navigation satellite system (global navigation satellite system, GNSS) module, an FM module, a near field communication (near field communication, NFC) module, an infrared module, or the like that is used in the electronic device 100.

The electronic device 100 may implement a display function through the GPU, the display 190, the application processor, and the like. The GPU is a microprocessor for image processing, and is connected to the display 190 and the application processor. The GPU is configured to: perform mathematical and geometric computation, and render an image. The processor 110 may include one or more GPUs that execute program instructions to generate or change display information.

The display 190 is configured to display an image, a video, and the like. In some embodiments, the electronic device 100 may include one or more displays 190. The display 190 may be at least one of an LCD, an OLED display, an AMOLED display, an FLED display, a mini-LED display, a micro-LED display, a micro-OLED display, a quantum dot light-emitting diode (quantum dot light-emitting diode, QLED) display, and the like.

The electronic device 100 may implement an image shooting function through the camera module 180, the ISP, the video codec, the GPU, the display 190, the application processor AP, the neural-network processing unit NPU, and the like.

The camera module 180 may be configured to capture color image data and depth data of a photographed object. The ISP may be configured to process the color image data captured by the camera module 180. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera module 180.

In some embodiments, the camera module 180 may include a color camera module and a 3D sensing module.

In some embodiments, a photosensitive element of a camera of the color camera module may include a CCD or a CMOS phototransistor. The photosensitive element converts an optical signal into an electrical signal, and then transmits the electrical signal to the ISP to convert the electrical signal into a digital image signal. The ISP outputs the digital image signal to the DSP for processing.

In some embodiments, the 3D sensing module may be a structured light 3D sensing module. The structured light 3D sensing module may include an infrared transmitter, an infrared camera module, and the like. The structured light 3D sensing module first emits a light spot of a specific pattern onto a photographed object, and then receives an encoded light spot pattern on a surface of the object, to further compare the light spot pattern with an original projected light spot, and determine three-dimensional coordinates of the object. The three-dimensional coordinates may include a distance between the electronic device 100 and the photographed object. The 3D sensing module may obtain a distance (namely, a depth) between the 3D sensing module and the photographed object by using time of turning back an infrared ray, to obtain a 3D depth-of-field image.

The structured light 3D sensing module may be further applied to fields such as facial recognition, somatic game consoles, and industrial machine vision detection. The 3D sensing module may be further used in fields such as a game console, AR, and VR.

In some other embodiments, the camera module 180 may further include two or more cameras. The two or more cameras may include a color camera, and the color camera may be configured to capture color image data of a photographed object. The two or more cameras may capture depth data of the photographed object by using a stereo vision technology.

In some embodiments, the electronic device 100 may include one or more camera modules 180. The electronic device 100 may include one front-facing camera module and one rear-facing camera module. The front-facing camera module may be configured to capture color image data and depth data of a photographer, and the rear-facing camera module may be configured to capture color image data and depth data of a photographed object (such as a character or a scenery) facing the photographer.

In some embodiments, the electronic device 100 may identify, based on an image captured by the front-facing camera module, whether the image includes a face image of the user, and further determine, based on the captured image, whether the user gazes at the display screen of the electronic device 100.

In some embodiments, the CPU, the GPU, or the NPU in the processor 110 may process the color image data and the depth data that are captured by the camera module 180. In some embodiments, the NPU may identify, by using a neural network algorithm based on a skeleton point recognition technology, for example, a convolutional neural network (CNN) algorithm, the color image data captured by the camera module 180, to determine a skeleton point of a photographed character. The CPU or the GPU may alternatively be used to run a neural network algorithm to determine a skeleton point of the photographed character based on the color image data. In some embodiments, the CPU, the GPU, or the NPU may be further used to determine a figure (for example, a body proportion and a fatness and thinness degree of a body part between skeleton points) of the photographed character based on depth data captured by the camera module 180 (which may be the 3D sensing module) and the recognized skeleton point, further determine a beautification parameter of the photographed character, and finally process a shot image of the photographed character based on the body beautification parameter, so that a body shape of the photographed character in the shot image is beautified.

The memory 120 may be configured to store computer-executable program code. The executable program code includes instructions. The memory 120 may include a program storage region and a data storage region. The program storage region may store an operating system, an application required by at least one function (for example, a sound playing function and an image playing function), and the like. The data storage region may store data (such as audio data and an address book) and the like that are created during use of the electronic device 100. In addition, the memory 120 may include a high-speed random access memory, and may further include a nonvolatile memory, for example, at least one magnetic disk storage device, a flash memory device, or a universal flash storage (universal flash storage, UFS). The processor 110 runs instructions stored in the memory 120 and/or instructions stored in the memory disposed in the processor, to perform various function methods and data processing of the electronic device 100.

The electronic device 100 may implement an audio function, for example, music playing and recording, through the audio module 150, the application processor, and the like.

The pressure sensor 160A is configured to sense a pressure signal, and can convert the pressure signal into an electrical signal. In some embodiments, the pressure sensor 160A may be disposed on the display 190. In some other embodiments, the pressure sensor 160A may alternatively be detachably disposed outside the display 190. There are a plurality of types of pressure sensors 160A, such as a resistive pressure sensor, an inductive pressure sensor, and a capacitive pressure sensor. The capacitive pressure sensor may include at least two parallel plates made of conductive materials. When a force is applied to the pressure sensor 160A, capacitance between electrodes changes. The electronic device 100 determines pressure intensity based on a change in the capacitance. When a touch operation is performed on the display 190, the electronic device 100 detects intensity of the touch operation by using the pressure sensor 160A. The electronic device 100 may also calculate a touch location based on a detection signal of the pressure sensor 160A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The optical proximity sensor 160B may include, for example, a light-emitting diode and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When intensity of the detected reflected light is greater than a threshold, the electronic device 100 may determine that there is an object near the electronic device 100. When intensity of the detected reflected light is less than a threshold, the electronic device 100 may determine that there is no object near the electronic device 100. The electronic device 100 may detect, by using the optical proximity sensor 160B, that the user holds the electronic device 100 close to an ear for a call, to automatically turn off a screen for power saving. The optical proximity sensor 160B may also be configured to: automatically unlock and lock a screen in a flip cover mode and a pocket mode.

The fingerprint sensor 160C is configured to capture a fingerprint, and a captured fingerprint image includes feature information of the fingerprint. For example, the fingerprint image includes parts such as ridges (raised lines with a specific width and orientation in the fingerprint image) and valleys (recessed regions between ridges) on the fingerprint surface. Fingerprint images of different fingers of different users are different. The fingerprint image is used to implement fingerprint recognition, fingerprint gesture recognition, and the like. In some implementations of this application, the fingerprint image is a multi-grayscale image that has black ridges and white valleys and that can be processed by a fingerprint recognition algorithm of the electronic device. The electronic device 100 may implement fingerprint unlock, application access lock, fingerprint photographing, fingerprint-based call answering, and the like by using a feature of the captured fingerprint. The electronic device 100 may have a fingerprint recognition function. The fingerprint recognition function may identify whether a captured image is a fingerprint image, and may further identify a user identity based on the fingerprint image. The electronic device 100 may further have a function of recognizing a fingerprint gesture. The fingerprint sensor 160C may be disposed on the back (for example, below a rear-facing camera or in the lower middle part of the electronic device), the front (for example, below the display 190), or a side surface of the mobile phone. For another example, the fingerprint sensor 160C may be disposed in the display 190, and is integrated with the display 190 to implement a fingerprint recognition function of the mobile phone 100. In this case, the fingerprint sensor 160C is configured as a part of the display 190, or may be disposed in the display 190 in another manner. In this embodiment of this application, the fingerprint sensor 160C may use any type of sensing technology, including but not limited to an optical sensing technology, a capacitive sensing technology, a piezoelectric sensing technology, an ultrasonic sensing technology, and the like.

The fingerprint sensor 160C may be an optical sensor. The optical sensor utilizes principles of light refraction and reflection to detect light refracted and reflected by an object in contact with the fingerprint component. Angles and brightness of the light refracted and reflected by an uneven surface of the object vary. The optical sensor projects the received light onto an image capture component of the optical sensor through an optical structure, thereby forming a touch image. The electronic device performs fingerprint recognition on the touch image, to detect whether the touch image is a fingerprint image. The fingerprint image is a touch image including a fingerprint.

The fingerprint sensor 160C may further include a capacitive sensor. The capacitive sensor may detect a change in capacitance between a surface of an object in contact with the fingerprint component and an electrode of the sensor. When the object touches a surface of the capacitive sensor, the capacitive sensor detects an electrical signal generated by a capacitance change and converts, based on an electric field distribution pattern of the electrical signal, the electrical signal into a digital signal, thereby forming a touch image.

The fingerprint sensor 160C may further include an ultrasonic sensor. The ultrasonic sensor detects ultrasonic pulses reflected and scattered by an object in contact with the fingerprint component, to determine a distance difference between ridges and valleys on a surface of the object based on a difference of ultrasonic pulse signals, so as to form a touch image based on this distance difference.

The fingerprint sensor 160C may further capture a touch image by using a sensor based on another principle. This is not limited in this application.

The touch sensor 160D is also referred to as a "touch component". The touch sensor 160D may be disposed on the display 190, and the touch sensor 160D and the display 190 constitute a touchscreen, which is also referred to as a "touch screen". The touch sensor 160D is configured to detect a touch operation performed on or near the touch sensor 160D, to generate a touch (TP, Touch Panel) signal. The touch sensor 160D may transfer the detected touch operation to the application processor to determine a type of a touch event. A visual output related to the touch operation may be provided on the display 190. In some other embodiments, the touch sensor 160D may alternatively be disposed on a surface of the electronic device 100 at a location different from that of the display 190.

The button 170 may include a power button, a volume button, and the like. The button 170 may be a mechanical button, or may be a touch button. The electronic device 100 may receive a button input, and generate a button signal related to a user setting and function control of the electronic device 100. The fingerprint sensor 160C may be disposed on the button 170, and the fingerprint sensor 160C and the button 170 constitute a button having a fingerprint capture function. The fingerprint sensor 160C detects a touch operation on the button 170, and captures a fingerprint of a finger that touches the button 170.

The electronic device 100 provided in this embodiment of this application may run an operating system (Operating System, OS). The operating system may be various operating systems currently used in the industry, such as an operating system developed based on OpenHarmony, such as HarmonyOS, or another operating system such as Android^{™} or an iOS mobile operating system; or may be various open-source operating systems or derivative operating systems thereof, such as a Linux OS and another embedded operating system; or may be a new operating system in the future, such as an artificial intelligence AI-based operating system. The operating system is a set of interrelated system software programs that manage and control operations of the electronic device, use and run hardware and software resources, and provide public services to organize user interaction. The operating system plays a connecting role in the electronic device, connects to a physical device at a hardware layer downwards, and provides a running environment for application software upwards.

The operating system may usually include a kernel layer, a middleware layer, and an application layer. The application layer includes an application, and the application may include a system application and a third-party application. The middleware layer is a series of software or a framework that provides various services for application developers, and is used to provide various services such as a database, multimedia, and graphics, or provide various capabilities such as distributed scheduling and system expansion. For example, the middleware layer may be further roughly divided into a framework layer and/or a system service layer. The framework layer provides an application programming interface (application programming interface, API) and a programming framework for an application at the application layer. The system service layer includes a set of core capabilities of the system and provides a service for an application through the framework layer. The kernel layer is a layer between hardware and software. The kernel layer may include a hardware driver and an operating system kernel. In addition to providing the hardware driver, the kernel layer supports functions such as memory management and system process management.

Various types and forms of electronic devices are used in our daily life, and the electronic device 100 is used in a wide range of scenarios. Therefore, based on different forms and functions of the electronic device 100, different application scenarios, and different user requirements, operating systems used in the electronic device 100 may also be different. These operating systems share commonalities but also have their own unique features. Different operating systems affect user experience, application ecosystem, and system performance. Basic functions implemented by the electronic device 100 provided in this application may be implemented by using a general-purpose operating system, or may be implemented by using a dedicated operating system. To describe an implementation of embodiments of this application in a specific operating system more clearly, the following shows an architecture of an operating system. Based on this, a person skilled in the art may derive an implementation of embodiments of this application in another specific operating system, for example, an implementation in a HarmonyOS or an Android^{™} operating system.

A software system of the electronic device 100 may use a layered architecture, an eventdriven architecture, a microkernel architecture, a microservice architecture, or a cloud architecture. In embodiments of this application, an operating system with a hierarchical architecture is used as an example to describe a software structure of the electronic device 100.

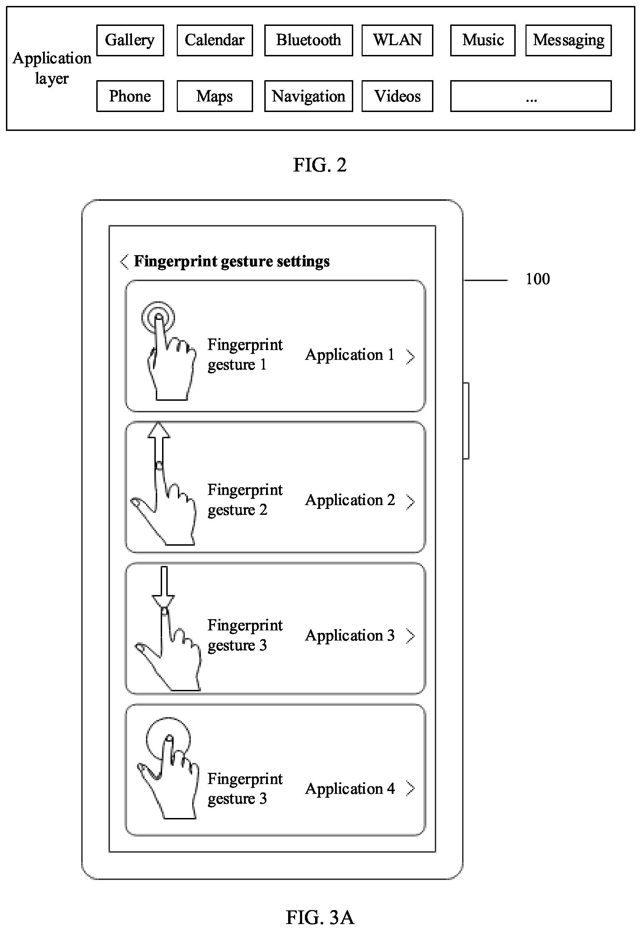

FIG. 2 is a block diagram of the software structure of the electronic device 100 according to an embodiment of this application.

In a layered architecture, software is divided into several layers, and each layer has a clear role and task. The layers communicate with each other through a software interface. In some embodiments, the operating system includes an application layer.

The application layer may include a series of application packages.

As shown in FIG. 2, the application package may include applications such as Camera, Gallery, Calendar, Phone, Maps, Navigation, WLAN, Bluetooth, Music, Videos, and Messaging.

With increasing intelligence of electronic devices, functions that the electronic devices can implement become richer and more diverse, but correspondingly, user operations required to use these functions are increasingly complex. To simplify complex operations, different types of shortcut interaction methods are developed in the conventional technologies.

For example, in a standby mode, a touch gesture of the user is recognized, and a corresponding application is started. If the started application is an application that requires security verification, the user inputs a password to unlock access permission. For another example, a fingerprint recognition apparatus is built in a button of the electronic device, and a correspondence between a fingerprint and an application is set, so that the user may press the button by using fingerprints of different fingers, to start different applications. However, these methods still suffer from limitations such as insufficient simplicity, lack of flexibility, and potential information security risks.

This application provides a method for quickly starting an application, applied to an electronic device. The electronic device includes a fingerprint recognition apparatus. In some embodiments, the electronic device may be the electronic device 100 shown in FIG. 1, and the fingerprint recognition apparatus may be the fingerprint sensor 160C.

A processing process of quickly starting an application by an electronic device according to an embodiment of this application is described with reference to FIG. 1. The electronic device detects a touch operation of a user and continuously captures a fingerprint image of the user, determines a fingerprint gesture of the user based on the continuously captured fingerprint image, and quickly starts a first application corresponding to the fingerprint gesture.

In some embodiments of this application, an application corresponding to a preset fingerprint gesture may be set. When determining that the fingerprint gesture of the user matches the preset fingerprint gesture, the electronic device quickly starts the application corresponding to the preset fingerprint gesture. For example, the user may further set a plurality of preset fingerprint gestures. For example, a preset fingerprint gesture 1 corresponds to an application 1, and a preset fingerprint gesture 2 corresponds to an application 2.

In some embodiments of this application, the user may set a correspondence between a preset fingerprint gesture and an application by using a fingerprint gesture setting interface of a function of quickly starting an application. FIG. 3A is a diagram of a fingerprint gesture setting interface of a function of quickly starting an application according to an embodiment of this application. As shown in FIG. 3A, for example, a user may set the preset fingerprint gesture 1 to correspond to the application 1, the preset fingerprint gesture 2 to correspond to the application 2, a preset fingerprint gesture 3 to correspond to an application 3, and a preset fingerprint gesture 4 to correspond to an application 4. For example, the preset fingerprint gesture 1 may be a dual-touch gesture, the preset fingerprint gesture 2 may be a slide-up gesture, the preset fingerprint gesture 3 may be a slide-down gesture, and the preset fingerprint gesture 4 may be a touch-and-hold gesture. The application 1 may be a phone application, the application 2 may be a messaging application, the application 3 may be a camera application, and the application 4 may be a microphone application. Based on a setting that different fingerprint gestures correspond to different applications, the electronic device can quickly start, in response to the different fingerprint gestures of the user, the applications corresponding to the different fingerprint gestures.

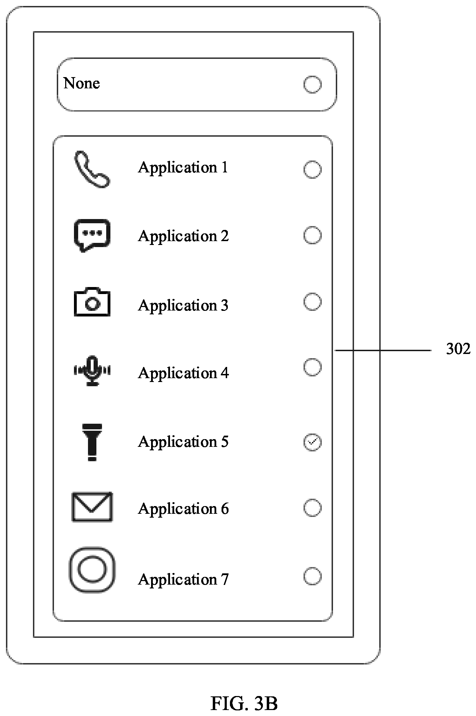

In some embodiments of this application, when the user wants to change the correspondence between the preset fingerprint gesture and the application, the user may tap a region in which the preset fingerprint gesture is located, to perform a setting. For example, the user may set the preset fingerprint gesture 1 as a dual-touch gesture, and set a correspondence between the dual-touch gesture and the application 1. If the correspondence between the dual-touch gesture and the application 1 needs to be changed, an arrow on the right side of the application 1 at a location shown by a finger in FIG. 3A is tapped. In response to a single tap of the user on the arrow, the electronic device displays a display interface shown in FIG. 3B. FIG. 3B is a diagram of an application list on a fingerprint gesture setting interface according to an embodiment of this application. The user may select, as required, a candidate application from the application list 302 displayed on the display interface as an application corresponding to the dual-touch gesture. For example, the user selects an application 5. When the user successfully checks the application 5, the dual-touch gesture in FIG. 3A is changed to correspond to the application 5. Icons of the applications in FIG. 3B are merely example icons, and do not limit types and functions of the applications. In some embodiments of this application, the electronic device may perform identity verification on the user based on the captured fingerprint image. After the verification succeeds, the fingerprint gesture is determined based on the continuously captured fingerprint image, and the application corresponding to the fingerprint gesture is started. If the identity verification fails, the fingerprint capture is stopped.

In some embodiments of this application, a user may set different fingerprints to correspondingly start different applications. For example, a fingerprint 1 corresponds to the application 1, and a fingerprint 2 corresponds to the application 2.

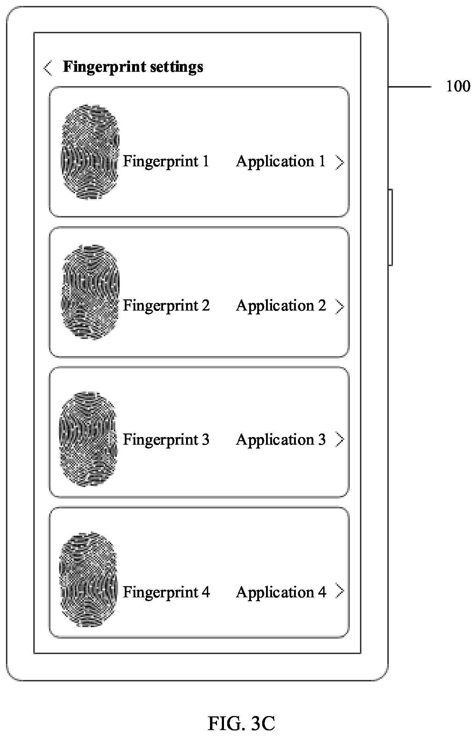

FIG. 3C is a diagram of a fingerprint setting interface of a function of quickly starting an application according to an embodiment of this application. In some embodiments of this application, the user may set a correspondence between a fingerprint and an application by using the fingerprint setting interface of the function of quickly starting an application shown in FIG. 3C. For example, a user may set the fingerprint 1 to correspond to the application 1, the fingerprint 2 to correspond to the application 2, a fingerprint 3 to correspond to the application 3, and a fingerprint 4 to correspond to the application 4. The user may perform a setting that fingerprints of different fingers start different applications. When the electronic device is used by a plurality of users, fingerprints of different users may start different applications. For example, the application 1 may be a phone application, the application 2 may be a messaging application, the application 3 may be a camera application, and the application 4 may be a microphone.

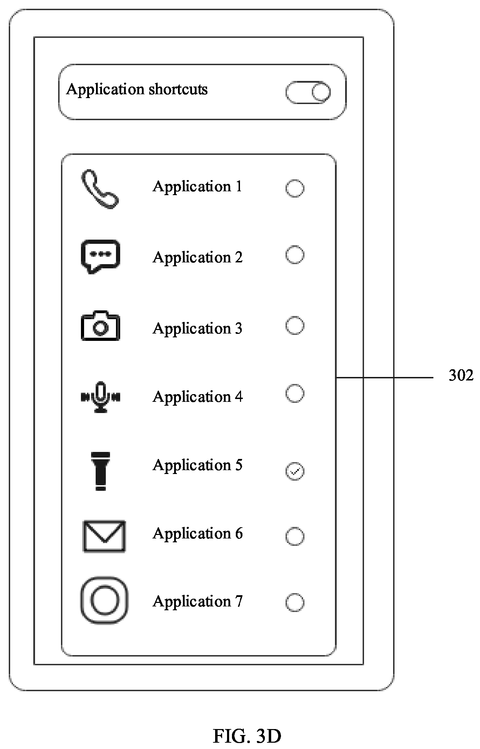

In some embodiments of this application, when the user wants to change the correspondence between a fingerprint and an application, the user may tap a region in which the fingerprint is located, to perform a setting. For example, if the user wants to change the correspondence between the fingerprint 1 and the application 1, the user taps an arrow on the right of the application 1. In response to a single tap of the user on the arrow, the electronic device displays an application list shown in FIG. 3D. FIG. 3D shows an application list on a setting interface of applications corresponding to fingerprints. The user may select an application from the application list as required. For example, the user selects the application 5. When the user successfully checks the application, the fingerprint 1 in FIG. 3D is changed to correspond to the application 5. Icons of the applications in FIG. 3D are merely example icons, and do not limit types and functions of the applications. Different fingerprints are set to correspondingly start different applications, so that the user may set fingerprints of different fingers to correspondingly start different applications. Alternatively, in a public electronic device, the user may further set fingerprints of different users to correspondingly start different applications, to quickly start the applications. For example, in a home electronic device, the user may set fingerprints of different family members to correspond to different applications, and the different family members may quickly start corresponding applications by using their own fingerprints, thereby providing a shortcut function and ensuring security and privacy.

In this embodiment of this application, fingerprint-based identity verification is performed on the user, and the fingerprint gesture is determined based on the touch operation of the user, to quickly start the application corresponding to the fingerprint gesture. This implements one-step fingerprint authentication and application start, simplifies an operation process, and improves user experience.

In some embodiments of this application, the fingerprint image may include a first fingerprint image and a second fingerprint image. In a process in which the fingerprint sensor continuously captures the fingerprint image, the electronic device may perform identity verification on the user based on the captured first fingerprint image, and determine the fingerprint gesture based on the first fingerprint image and the second fingerprint image that are continuously captured. When a non-fingerprint image appears between the first fingerprint image and the second fingerprint image that are continuously captured, it may be determined that the user removes a finger from the fingerprint sensor. Then the user places the finger on the fingerprint sensor again. In this case, it may be determined that the fingerprint gesture is a dual-touch gesture. The first fingerprint image includes a 1^{st} frame of fingerprint image of the user, and the electronic device may perform identity verification on the user based on the 1^{st} frame of fingerprint image. After capturing the 1^{st} frame of fingerprint image, the electronic device continuously captures the first fingerprint image, and may determine a single tap or touch operation based on duration of the first fingerprint image. When a non-fingerprint image appears between the first fingerprint image and the second fingerprint image, and two tap or touch operations may be determined based on duration of the first fingerprint image and duration of the second fingerprint image, it may be determined that the fingerprint gesture is a dual-tap gesture. In some embodiments, an operation of tapping the fingerprint sensor by the user may alternatively be determined based on duration of each of two consecutive captured fingerprint images. In this embodiment of this application, the dual touch may also be referred to as a dual tap.

In some embodiments, an action of tapping the fingerprint sensor by the user may alternatively be determined based on duration of each of two consecutive captured fingerprint images and a time interval between the two consecutive fingerprint images.

In some embodiments, when both the duration of the first fingerprint image and the duration of the second fingerprint image are less than first preset duration, and duration of the non-fingerprint image that appears between the first fingerprint image and the second fingerprint image is less than second preset duration, it is determined that the fingerprint gesture is a dual-tap gesture or a dual-touch gesture.

In some embodiments, the fingerprint image includes the first fingerprint image, that is, the user does not remove a finger from the fingerprint sensor. When the user does not remove the finger from the fingerprint sensor, the fingerprint gesture may be determined based on the duration of the first fingerprint image or a change of the fingerprint image. In some embodiments, the first fingerprint image may include the 1^{st} frame of fingerprint image captured by the fingerprint sensor, and identity verification is performed on the user based on the 1^{st} frame of fingerprint image.

In some embodiments, when determining, based on the continuously captured first fingerprint image, that a distance that the finger of the user moves on the fingerprint sensor is greater than or equal to a first preset distance, the electronic device may determine that the fingerprint gesture is a slide gesture. Further, the electronic device may determine, based on a direction that the finger of the user moves on the fingerprint sensor, whether the fingerprint gesture is sliding upward, sliding downward, sliding leftward, or sliding rightward.

In some other embodiments, when it is determined based on that the continuously captured first fingerprint image that a distance that the finger of the user moves on the fingerprint sensor is less than a second preset distance and the duration of the first fingerprint image is greater than third preset duration, it may be determined that the fingerprint gesture is a touch-and-hold gesture.

In some embodiments of this application, when detecting a touch operation of the user, the fingerprint sensor captures the first fingerprint image of the user, and performs identity verification on the user based on the first fingerprint image. The fingerprint sensor continuously captures the fingerprint image of the user. After the user removes a finger from the fingerprint sensor and touches the fingerprint sensor again, the fingerprint sensor continuously captures the second fingerprint image of the user, and determines, based on the first fingerprint image and the second fingerprint image, that the user taps or touches the fingerprint sensor twice with the finger. In this case, it may be determined that a fingerprint gesture corresponding to the touch operation of the user is a dual-touch gesture.

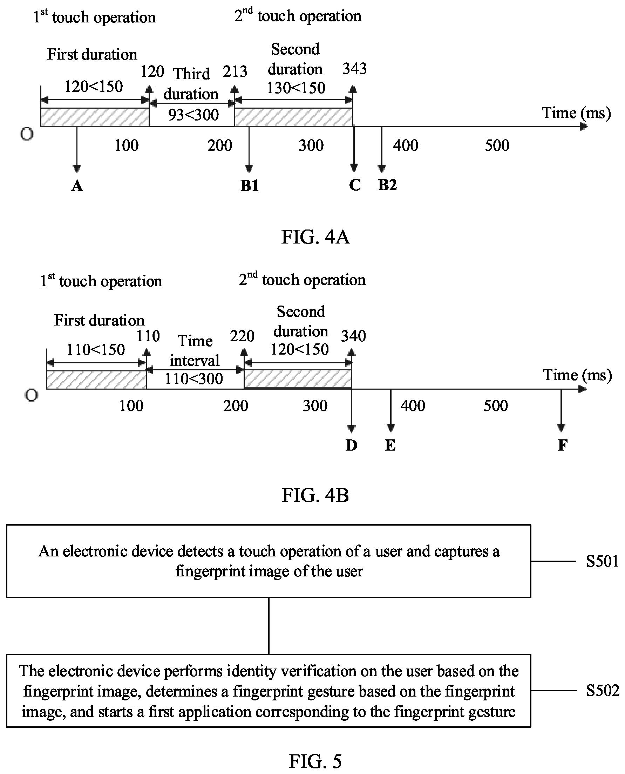

FIG. 4A is a diagram of a process in which a fingerprint sensor processes a touch operation according to an embodiment of this application. In FIG. 4A, timing starts from a time point when it is detected that a user touches the fingerprint sensor with a finger for the first time, which serves as an origin. Each time it is detected that the user removes the finger from the fingerprint sensor or touches the fingerprint sensor again, a corresponding time point is recorded, and a time point at which the fingerprint sensor starts to capture an image and a time point at which the fingerprint sensor stops capturing an image are recorded. An operation from the user touching the fingerprint sensor with the finger for the first time to the user removing the finger from the fingerprint sensor for the first time is a 1^{st} touch operation, namely, a 1^{st} single tap, and duration of the 1^{st} touch operation is first duration, during which a first fingerprint image is captured. An operation from the user touching the fingerprint sensor with the finger for the second time to the user removing the finger from the fingerprint sensor for the second time is a 2^{nd} touch operation, namely, a 2^{nd} single tap, and duration of the 2^{nd} touch operation is second duration, during which a second fingerprint image is captured. From the user removing the finger from the fingerprint sensor for the first time to the user touching the fingerprint sensor with the finger for the second time, the fingerprint sensor captures a non-fingerprint image, and duration in which the non-fingerprint image is captured is a time interval between the first fingerprint image and the second fingerprint image.

In some embodiments of this application, as shown in FIG. 4A, when detecting the 1^{st} touch operation of the user, the fingerprint sensor starts to capture the first fingerprint image from a point O, and performs identity verification based on a 1^{st} frame of fingerprint image of the first fingerprint image. At a point A shown in FIG. 4A, the identity verification succeeds, and an unlocking event is delivered. The electronic device is unlocked successfully at a point B1 shown in FIG. 4A. During identity verification, the fingerprint sensor continuously captures the first fingerprint image of the user. After the user removes the finger from the fingerprint sensor and touches the fingerprint sensor again, the fingerprint sensor continuously captures the second fingerprint image of the user. At a point C shown in FIG. 4A, the user removes the finger from the fingerprint sensor again, capturing of the second fingerprint image is completed, and the electronic device determines, based on the first fingerprint image and the second fingerprint image, that a gesture corresponding to the touch operations of the user is a dual-tap gesture or a dual-touch gesture. Because the electronic device unlocks successfully at the point B1, after determining at the point C that the fingerprint gesture corresponding to the touch operation of the user is a dual-touch gesture, the electronic device may start an application corresponding to the dual-touch gesture. If the electronic device is unlocked successfully at a point B2 shown in FIG. 4A, because the point B2 is after the point C, the electronic device needs to wait until the unlocking succeeds, and then start, after the point B2, an application corresponding to the dual-touch gesture. The electronic device may detect whether the user removes the finger from the fingerprint sensor or touches the fingerprint sensor with the finger while the fingerprint sensor continuously captures the first fingerprint image of the user during identity verification, so that identity verification and fingerprint capture can be performed in parallel, a fingerprint gesture can be recognized more accurately and quickly, and the application can be quickly started.

In some embodiments, when both duration of the first fingerprint image and duration of the second fingerprint image are less than first preset duration, and duration of the time interval between the first fingerprint image and the second fingerprint image is less than second preset duration, it is determined that the fingerprint gesture is a dual-tap gesture or a dual-touch gesture.

In some embodiments of this application, for example, the first preset duration may be set to 150 ms (millisecond), and the second preset duration may be set to 300 ms.

For example, as shown in FIG. 4A, the first duration is 120 ms, and the second duration is 130 ms. Duration of each of the two single taps is less than the first preset duration of 150 ms, and the time interval between the first fingerprint image and the second fingerprint image is 93 ms, which is less than the second preset duration of 300 ms. It may be determined, based on the foregoing data, that the fingerprint gesture corresponding to the touch operation of the user is the dual-touch gesture.

In some embodiments of this application, FIG. 4B is a diagram of a process in which a fingerprint sensor processes a touch operation according to an embodiment of this application. In FIG. 4B, timing starts from a time point when it is detected that a user touches the fingerprint sensor with a finger for the first time, which serves as an origin. Each time it is detected that the user removes the finger from the fingerprint sensor or touches the fingerprint sensor again, a corresponding time point is recorded, and a time point at which the fingerprint sensor starts to capture an image and a time point at which the fingerprint sensor stops capturing an image are recorded. An operation from the user touching the fingerprint sensor with the finger for the first time to the user removing the finger from the fingerprint sensor for the first time is a 1^{st} touch operation, namely, a 1^{st} single tap, and duration of the 1^{st} touch operation is first duration, during which a first fingerprint image is captured. An operation from the user touching the fingerprint sensor with the finger for the second time to the user removing the finger from the fingerprint sensor for the second time is a 2^{nd} touch operation, namely, a 2^{nd} single tap, and duration of the 2^{nd} touch operation is second duration, during which a second fingerprint image is captured. From the user removing the finger from the fingerprint sensor for the first time to the user touching the fingerprint sensor with the finger for the second time, the fingerprint sensor captures a non-fingerprint image, and duration in which the non-fingerprint image is captured is a time interval between the first fingerprint image and the second fingerprint image.

As shown in FIG. 4B, when detecting the 1^{st} touch operation of the user, the fingerprint sensor starts to capture the first fingerprint image from a point O, and the fingerprint sensor continuously captures the first fingerprint image of the user. After the user removes the finger from the fingerprint sensor and touches the fingerprint sensor again, the fingerprint sensor continuously captures the second fingerprint image of the user. At a point D shown in FIG. 4B, the user removes the finger from the fingerprint sensor for the second time, and the electronic device determines, based on the first fingerprint image and the second fingerprint image, that a gesture corresponding to the touch operation of the user is a dual-touch gesture, and starts to perform identity verification based on the first fingerprint image. At a point E, the identity verification succeeds, and an unlocking event is delivered. The electronic device is unlocked successfully at a point F. It has been determined at the point D before the point F that the gesture corresponding to the touch operation of the user is a dual-tap gesture or a dual-touch gesture. After the electronic device is unlocked successfully at the point F, the electronic device may start an application corresponding to the dual-touch gesture.

In some embodiments, when both duration of the first fingerprint image and duration of the second fingerprint image are less than first preset duration, and duration of the time interval between the first fingerprint image and the second fingerprint image is less than second preset duration, it is determined that the fingerprint gesture is the dual-touch gesture.

In some embodiments of this application, for example, the first preset duration may be set to 150 ms (millisecond), and the second preset duration may be set to 300 ms.

For example, as shown in FIG. 4B, the first duration is 110 ms, and the second duration is 120 ms. Duration of each of the two single taps is less than the first preset duration of 150 ms, and the time interval between the first fingerprint image and the second fingerprint image is 110 ms, which is less than the second preset duration of 300 ms. It may be determined, based on the foregoing data, that the fingerprint gesture corresponding to the touch operation of the user is the dual-touch gesture.

FIG. 5 shows a method for quickly starting an application according to an embodiment of this application. In the method, an application can be quickly started by using a fingerprint gesture.

S501: An electronic device detects a touch operation of a user and captures a fingerprint image of the user.

S502: The electronic device performs identity verification on the user based on the fingerprint image, determines a fingerprint gesture based on the fingerprint image, and starts a first application corresponding to the fingerprint gesture.

In this application, fingerprint verification is performed based on the fingerprint image, thereby ensuring security of an application start process; and whether the fingerprint gesture is a preset gesture is identified, thereby effectively reducing a probability of an accidental touch. In an actual operation, the user may start the corresponding first application by using the fingerprint gesture, thereby implementing one-step fingerprint authentication and application start, simplifying an operation procedure, and eliminating the need for the user to go through a step-by-step process of first performing fingerprint unlocking, then searching for the corresponding application, and finally tapping to start the application.

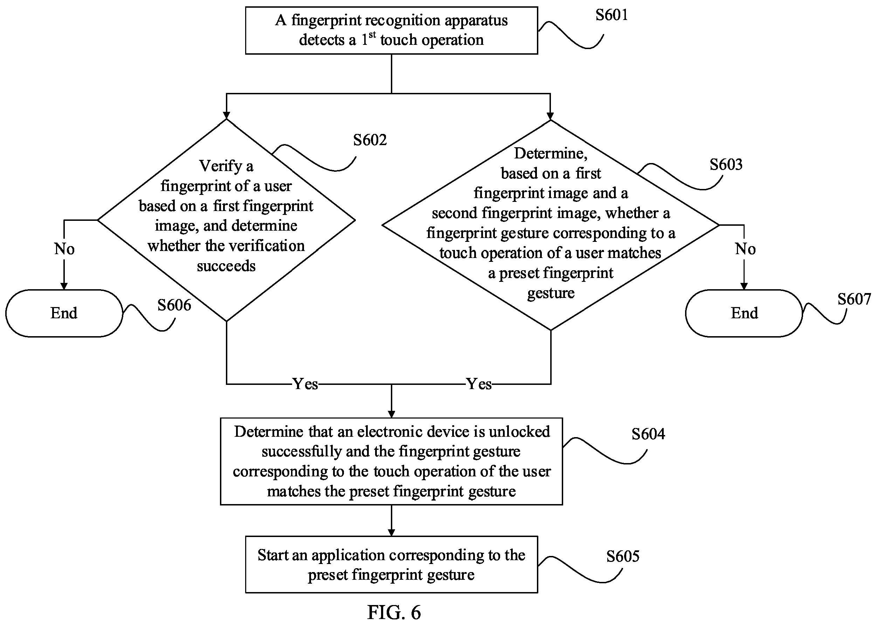

FIG. 6 shows a method for quickly starting an application according to another embodiment of this application. The method for quickly starting an application may include the following steps:

S601: A fingerprint recognition apparatus detects a 1^{st} touch operation, and from detection of the 1^{st} touch operation, the fingerprint recognition apparatus continuously captures a first fingerprint image and a second fingerprint image, so that the electronic device verifies an identity of a user based on the first fingerprint image, and recognizes a fingerprint gesture based on the first fingerprint image and the second fingerprint image.

S602: The electronic device verifies a fingerprint of the user based on the first fingerprint image; and if the verification succeeds, the electronic device delivers an unlocking event and starts unlocking, and the procedure proceeds to step S604; or if the verification fails, the procedure proceeds to step S606, where the procedure ends; and the electronic device stops verifying the fingerprint of the user and stops capturing a fingerprint image.

In some embodiments, the first fingerprint image includes a 1^{st} frame of fingerprint image. Once a fingerprint capture component captures the 1^{st} frame of fingerprint image, the electronic device obtains the 1^{st} frame of fingerprint image, and starts to verify the fingerprint of the user based on the 1^{st} frame of fingerprint image, without waiting until the entire first fingerprint image is captured.

In some embodiments, optionally, if the fingerprint of the user cannot be verified based on the 1^{st} frame of fingerprint image, the electronic device continues to obtain a 2^{nd} frame of fingerprint image from the first fingerprint image, and then verifies the fingerprint of the user based on the 2^{nd} frame of fingerprint image. If the fingerprint of the user still cannot be verified based on the 2^{nd} frame of fingerprint image, the electronic device obtains a 3^{rd} frame of fingerprint image from the first fingerprint image, and so on, until fingerprint verification of the user succeeds, or until time consumed for verifying the fingerprint image of the user is greater than fourth preset duration, it is determined that fingerprint verification of the user fails, and the procedure proceeds to an end node.

S603: If the electronic device determines, based on the first fingerprint image and the second fingerprint image, that a fingerprint gesture corresponding to the touch operation of the user matches a preset fingerprint gesture, the procedure proceeds to S604; or if the electronic device determines that a fingerprint gesture corresponding to a touch operation of the user does not match the preset fingerprint gesture, the procedure proceeds to S607, where the procedure ends; and the electronic device stops capturing a fingerprint image.

In some embodiments, in a process of capturing the fingerprint image, the user always does not remove a finger from a surface of a fingerprint sensor. In this case, step S603 includes: recognizing, based on the first fingerprint image, the fingerprint gesture corresponding to the touch operation of the user.

S604: If the electronic device determines that the unlocking succeeds and the fingerprint gesture corresponding to the touch operation of the user matches the preset fingerprint gesture, the procedure proceeds to step S605.

S605: Start an application corresponding to the preset fingerprint gesture.

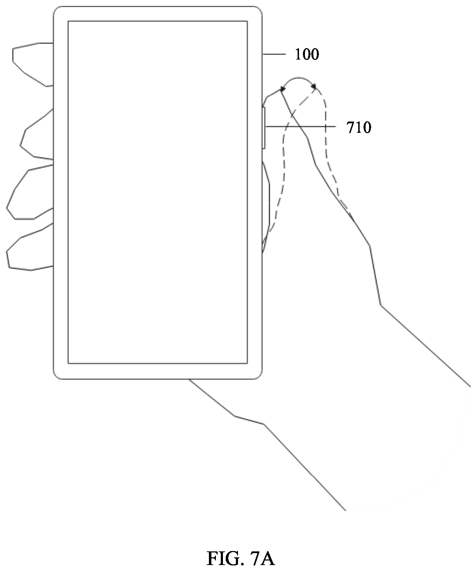

FIG. 7A to FIG. 7D are diagrams of a display interface of an electronic device during quick start of an application according to an embodiment of this application.

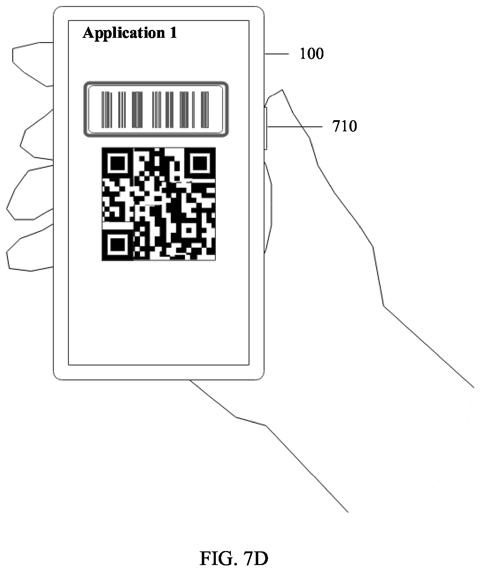

In some embodiments, as shown in FIG. 7A, the electronic device 100 is in a screen-locked state. For example, the electronic device 100 is in a screen-off state. When a user touches a fingerprint recognition apparatus 710 of the electronic device 100 for the first time, the electronic device 100 starts to continuously capture a first fingerprint image and a second fingerprint image. When identity verification of the user based on the first fingerprint image succeeds, the electronic device 100 delivers an unlocking event, and the unlocking succeeds. The electronic device 100 determines, based on the first fingerprint image and the second fingerprint image, that a fingerprint gesture corresponding to the touch operation of the user matches a dual-touch gesture. If the electronic device 100 determines that identity verification of the user succeeds and the fingerprint gesture corresponding to the touch operation of the user matches the dual-touch gesture, an application 1 corresponding to the dual-touch gesture is started. After the application 1 is started, a display interface of the electronic device 100 may be displayed as an interface of the application 1 shown in FIG. 7D.

In the foregoing process, an unlocking process of the electronic device 100 is not displayed on the display interface of the electronic device 100. The user simultaneously unlocks the electronic device 100 and starts the application 1 by using the fingerprint gesture. During use, the display interface of the electronic device 100 directly changes from the screen-off state shown in FIG. 7A to a state of displaying a main interface of the application 1 shown in FIG. 7D.

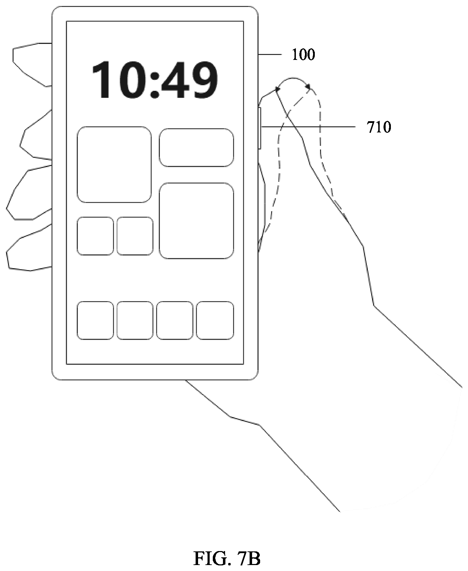

In some embodiments, as shown in FIG. 7B, the electronic device 100 is in a screen-unlocked state. For example, the electronic device 100 displays a home page. When a user touches the fingerprint recognition apparatus 710 of the electronic device 100, the electronic device 100 determines, based on a first fingerprint image and a second fingerprint image, that a fingerprint gesture corresponding to the touch operation of the user is a dual-touch gesture. The application 1 corresponding to the dual-touch gesture is started. In this case, a display interface of the electronic device 100 is shown in FIG. 7D, and a main interface of the application 1 is displayed.

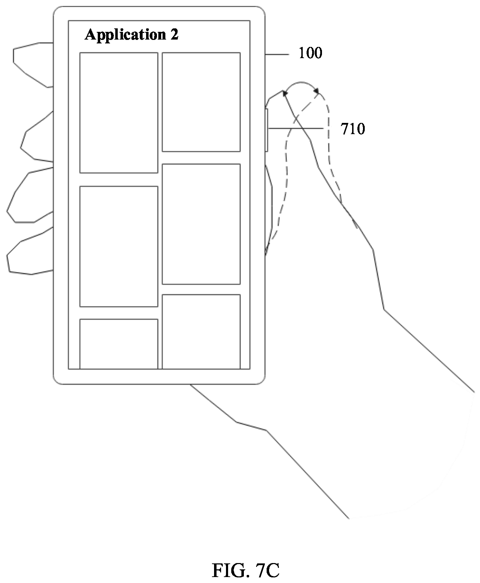

In some embodiments, as shown in FIG. 7C, when the electronic device 100 is in a screen-unlocked state, another application may be further displayed. For example, a user is browsing an application 2 by using the electronic device 100, and in this case, the application 1 needs to be started. The user touches the fingerprint recognition apparatus 710 of the electronic device 100 based on a preset fingerprint gesture, to quickly switch a display interface of the electronic device 100 from displaying the application 2 to displaying the application 1. The display interface of the electronic device 100 is shown in FIG. 7D, and a main interface of the application 1 is displayed.

In some embodiments of this application, when the electronic device is in the screen-locked state or the screen-unlocked state, by using a fingerprint gesture, the electronic device can be quickly unlocked and an application can be started.

In some embodiments of this application, if fingerprint verification fails and/or the fingerprint gesture does not match a preset gesture, the electronic device does not start an application corresponding to the preset fingerprint gesture. If the fingerprint verification fails, it indicates that the user is not an owner of the electronic device, and starting a second application may cause a security risk such as information leakage. If the fingerprint gesture does not match the preset gesture, it indicates that the user may accidentally touch a fingerprint component. When either or both of the preceding scenarios occur, the electronic device does not start a first application corresponding to the preset gesture. This ensures security and avoids an accidental touch, thereby improving user experience.

In this application, fingerprint verification of the user includes: The first fingerprint image is compared with a fingerprint image that is of the owner and that is prestored in the electronic device; and when the first fingerprint image is consistent with the fingerprint image of the owner, the verification succeeds; or if the first fingerprint image is inconsistent with the fingerprint image of the owner, the verification fails.

In some embodiments of this application, the electronic device includes a switch apparatus. When the switch apparatus is turned on, the electronic device performs the method for quickly starting an application in any embodiment of this application. The switch apparatus may be operated by the user to switch between an on state and an off state. When the switch apparatus is turned off, the electronic device does not perform the method for quickly starting an application in any embodiment of this application. In this way, the user can flexibly choose, by using the switch apparatus, to enable or disable a function of quickly starting an application.

For example, the electronic device receives a first operation of the user, and enables a fingerprint gesture function based on the first operation. The electronic device receives a second operation of the user, and disables the fingerprint gesture function based on the second operation. When the fingerprint gesture function is enabled, the electronic device performs the method for quickly starting an application in any embodiment of this application. When the fingerprint gesture function is disabled, the electronic device does not perform the method for quickly starting an application in any embodiment of this application.

The fingerprint gesture function may also be referred to as a function of quickly starting an application. In this application, the fingerprint gesture function and the function of quickly starting an application may be equivalent.

The switch apparatus is a physical switch or a virtual switch. When the switch apparatus is a physical switch, the user may control the switch apparatus by performing a physical operation. When the switch apparatus is a virtual switch, the user may control the switch apparatus by interacting with a touchscreen of the electronic device, for example, a touchscreen constituted by the display 190 and the touch sensor 160D.

In some implementations of this application, when the switch apparatus is a virtual switch, the virtual switch may include an icon displayed on a display interface of the touchscreen of the electronic device, and the user taps the icon to switch between the on state and the off state.

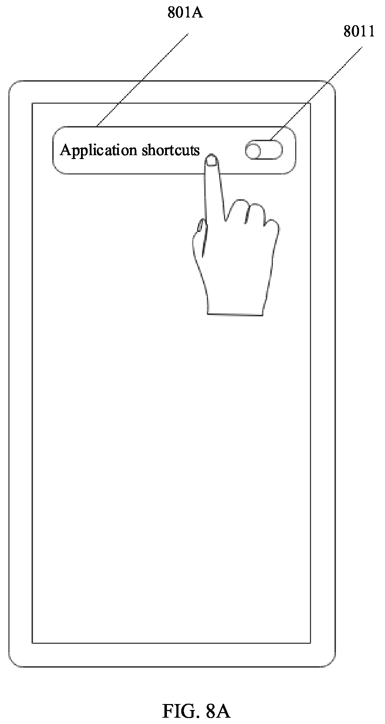

FIG. 8A to FIG. 8J are diagrams of display interfaces of an electronic device according to an embodiment of this application.

For example, as shown in FIG. 8A, a switch apparatus may include an icon 801A displayed on a display interface of a touchscreen. In some embodiments, the icon 801A may include a name of a function. For example, a name of a function of quickly starting an application by using a fingerprint gesture may be an "Application shortcuts" function. In this case, the name of the function displayed in the icon 801A is "Application shortcuts". The name of the function indicates a user to switch between an enabled state and a disabled state at the icon 801A.

In some embodiments of this application, the icon 801A may include a button 8011, and the button 8011 displays, in response to a selection of the user, whether a function is currently in the enabled state or the disabled state.

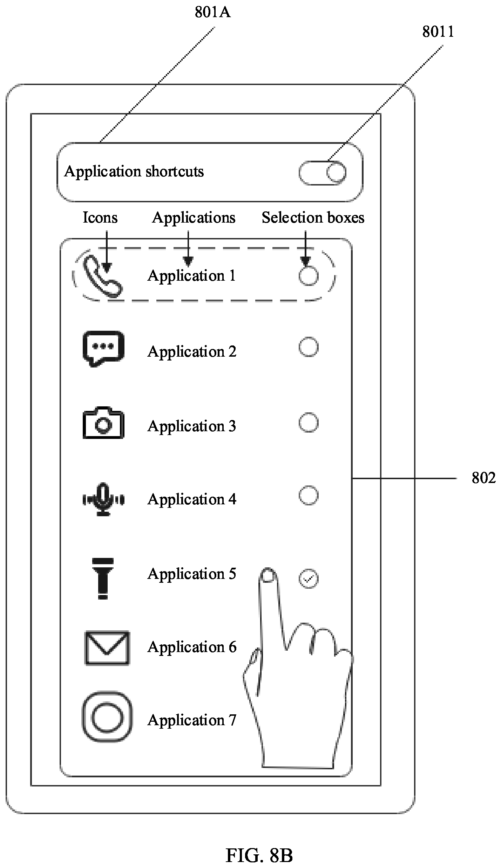

For example, when a round joystick in the button 8011 is located at a left location shown in FIG. 8A, it indicates that the function of quickly starting an application is currently in the disabled state. In response to a single tap of the user on the icon 801A, for example, a single tap on a location indicated by a finger in FIG. 8A, the round joystick in the button 8011 slides to a right location shown in FIG. 8B, to enable the function of quickly starting an application by using the fingerprint gesture. The electronic device 100 performs the method for quickly starting an application in any embodiment of this application.

In some embodiments of this application, whether the function is in the enabled state or the disabled state may be further displayed by using a color change of the icon 801A or the button 8011. For example, when the function is in the disabled state, a region other than the round joystick in the button 8011 has a first color, for example, white; and when the function is in the enabled state, a region other than the round joystick in the button 8011 changes to a second color, for example, green.

In some embodiments, the electronic device may display a setting interface of a fingerprint gesture function. The setting interface of the fingerprint gesture function includes an application list. The electronic device receives a third operation performed by the user on the application list to select a first application, and determines, from the application list in response to the third operation of the user, the first application corresponding to the fingerprint gesture.

In some embodiments of this application, the electronic device 100 further includes an application list 802. As shown in FIG. 8B, the application list 802 may be displayed on a display interface of the electronic device 100. The application list 802 includes one or more candidate applications for selection by the user. All or some of the candidate applications may be displayed on the display interface. In response to an operation of the user, the electronic device 100 determines, from the application list 802, a candidate application selected by the user as an application corresponding to a preset fingerprint gesture. In this way, the user can flexibly select, as required, the first application to be quickly started.

In some implementations of this application, when the function of quickly starting an application is disabled, as shown in FIG. 8A, the application list 802 is in a collapsed state, and is not displayed on the display interface. When the function of quickly starting an application is enabled, as shown in FIG. 8B, the application list 802 is in an expanded state, and is displayed on the display interface. When the application list 802 is displayed on the interface, the user may select, by tapping a region in which any candidate application is located, an application that needs to be quickly started.

For example, as shown in FIG. 8B, the application list 802 displays candidate applications 1 to 7. In some embodiments of this application, the application list 802 may display a name and/or an icon of each candidate application and a selection box corresponding to each candidate application. For example, in FIG. 8B, a region circled with a dashed line includes an icon, a name, and a selection box of the application 1. Icons of the applications in FIG. 8B are merely example icons, and do not limit types and functions of the applications.

In some embodiments of this application, when the user wants to start the application 5 by using the function of quickly starting an application, the user may tap a row in which the application 5 is located in the application list 802 (for example, tap a location indicated by a finger in FIG. 8B), to check the application 5 from a selection box corresponding to the application 5. If the selection box is checked successfully, a tick mark is displayed in the selection box of the application 5. The user may quickly start the application 5 by using a fingerprint gesture.

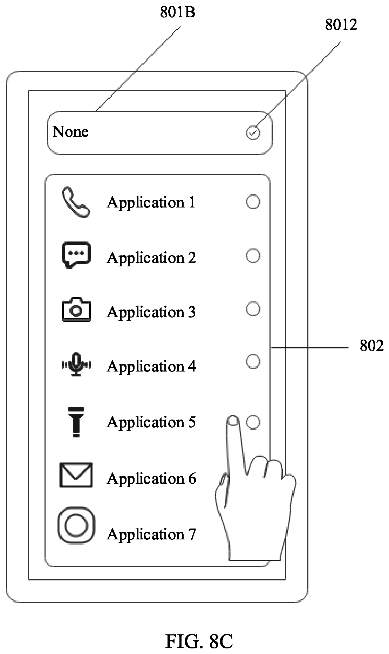

For another example, an icon of a switch apparatus may alternatively be shown as an icon 801B in FIG. 8C. "None" in the icon 801B indicates that a user does not select any candidate application as an application corresponding to a preset gesture, that is, the user does not want to start any application by using a fingerprint gesture, and the user wants to disable a function of quickly starting an application. The icon 801B may include a selection box 8012, and the selection box 8012 displays, in response to a selection of the user, whether a function is currently in an enabled state or a disabled state.

For example, when a tick mark shown in FIG. 8C is displayed in the selection box 8012, it indicates that "None" in the icon 801B is selected, and the function of quickly starting an application is in the disabled state. When the function of quickly starting an application is disabled, none of the applications in the application list 802 is selected by the user.

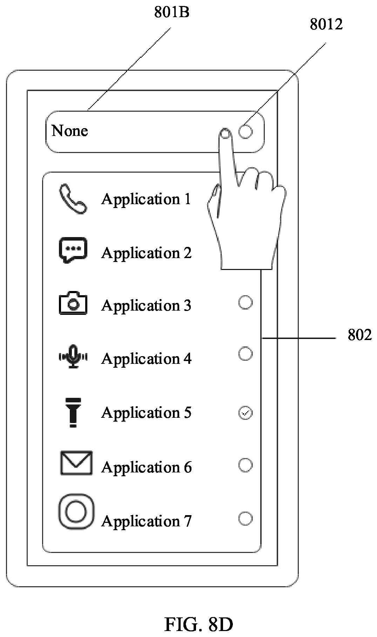

In some embodiments, when the user needs to enable the function of quickly starting an application, the user directly selects, from the application list 802, an application (for example, the application 5 shown in FIG. 8D) that needs to be started, to enable the function and set the candidate application as an application corresponding to a preset fingerprint gesture.

In some embodiments, when the user enables the function of quickly starting an application, as shown in FIG. 8D, the selection box 8012 of the icon 801B is in a blank state, and a selection box of the application corresponding to the preset fingerprint gesture is in a checked state.

In some embodiments, when the user needs to disable the function of quickly starting an application, the user may tap the icon 801B (for example, tap a location indicated by a finger in FIG. 8D), so that the tick mark shown in FIG. 8C is displayed again in the selection box 8012 of the icon 801B.

In some embodiments, whether a corresponding icon is selected may be further displayed by using a color change of the selection box 8012. For example, when selected, the selection box 8012 is in a third color, for example, blue; and when not selected, the selection box 8012 is in a fourth color, for example, gray.

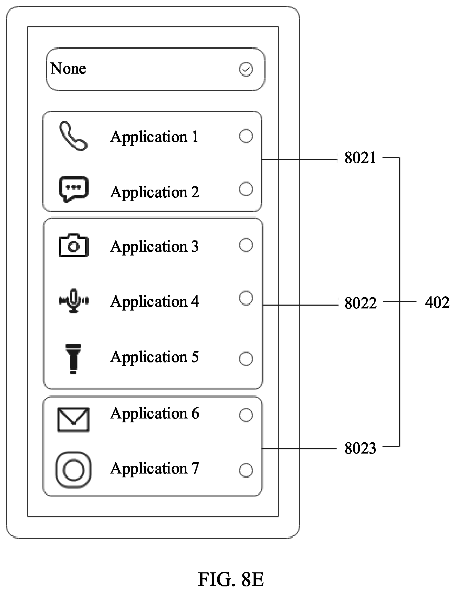

In some embodiments of this application, as shown in FIG. 8E, candidate applications in the application list 802 may be further grouped by type, to facilitate identification and selection of the user. For example, as shown in FIG. 8E, the application 1 to the application 7 in the application list 802 are divided into three groups, for example, a first group, a second group, and a third group. Each group of applications is displayed in a different region of the display interface. For example, the first group of candidate applications is displayed in a region 8021, the second group of candidate applications is displayed in a region 8022, and the third group of candidate applications is displayed in a region 8023.

In some embodiments of this application, the candidate applications in the application list 802 may be grouped by functional types. For example, the first group includes communication applications, the second group includes tool applications, and the third group includes payment applications. Certainly, the candidate applications may alternatively be grouped by another type, for example, may be grouped by a source of an application, importance of an application, or the like. A quantity of groups, a quantity of applications in each group, and a basis for grouping are not limited in this application. Grouping applications allows the user to set and select an application more conveniently. When the user needs to change settings of applications of the same type, the user can also perform the settings conveniently.

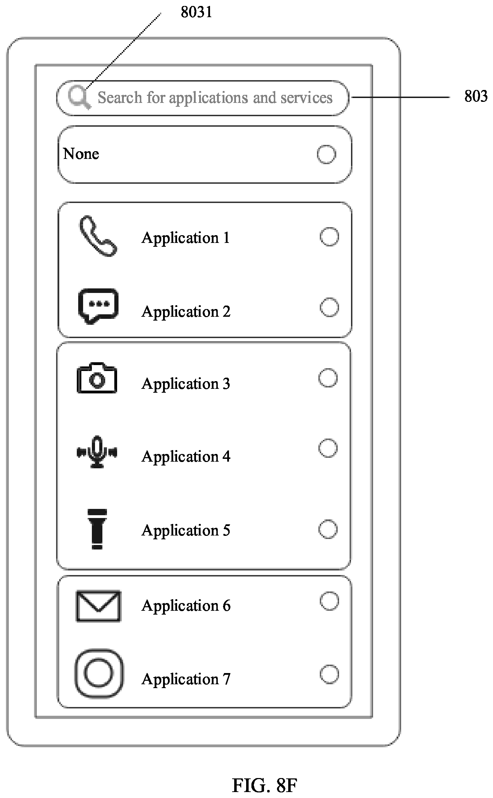

In some embodiments of this application, as shown in FIG. 8F, the display interface may include a search bar 803. The user may search for a related application by typing a keyword in the search bar 803.

In some embodiments of this application, the search bar 803 may include an icon 8031, and the icon 8031 indicates to the user that a search operation can be performed at a location of the search bar 803. For example, the icon 8031 may be a magnifier indicator shown in FIG. 8F.

In some embodiments of this application, the search bar 803 may further prompt, by using a text, the user to perform a search in the search bar 803, for example, a text prompt "Search for applications and services" shown in FIG. 8F.

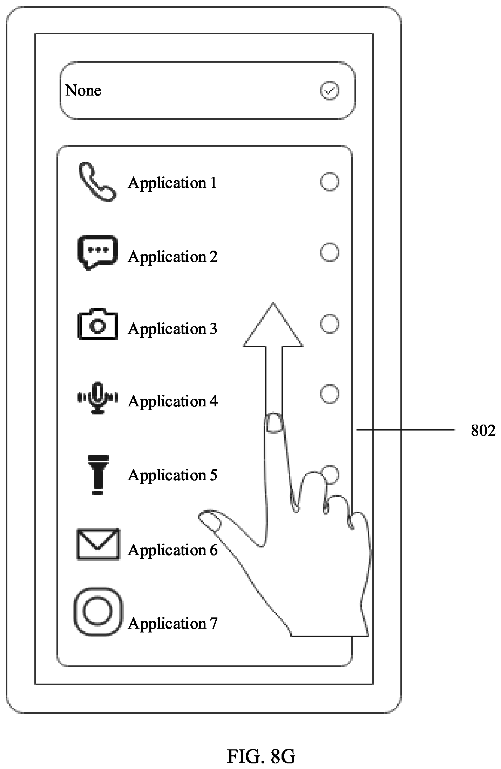

In some embodiments of this application, as shown in FIG. 8G, the application list 802 may display only some applications on the display interface, and hide other applications.

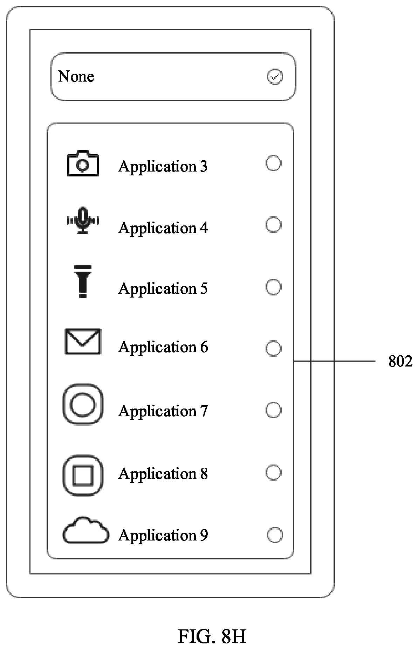

The user may perform a slide-up operation or a slide-down operation in a region of the application list 802. In response to the slide-up operation or the slide-down operation performed by the user on the application list 802, the electronic device 100 displays other hidden candidate applications in the application list 802. The electronic device may further hide a candidate application currently displayed in the application list 802. For example, as shown in FIG. 8G and FIG. 8H, in a direction shown by a gesture in the figure, the user performs the slide-up operation in the region of the application list 802 in FIG. 8G, so that a hidden application 8 and a hidden application 9 are displayed on a display interface in FIG. 8H. Correspondingly, the application 1 and the application 2 in the application list 802 in FIG. 8G are hidden.

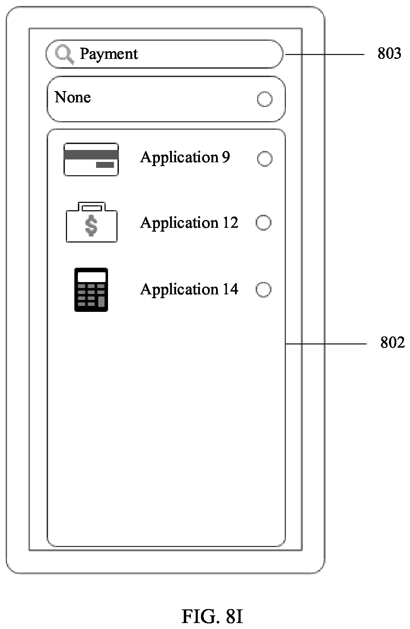

In some embodiments of this application, as shown in FIG. 8I, the user may further search the search bar 803 for a candidate application. In response to the search operation of the user, the electronic device 100 displays, in the application list 802, one or more candidate applications that meet a search condition of the user for selection by the user. If no candidate application meets the search condition of the user, the application list 802 displays a blank list. For example, as shown in FIG. 8I, if the user inputs a keyword "Payment" in the search bar 803, the application 9, an application 12, and an application 14 that have a payment function are displayed in the application list 802. The user may select the application 9, the application 12, or the application 14 as required.

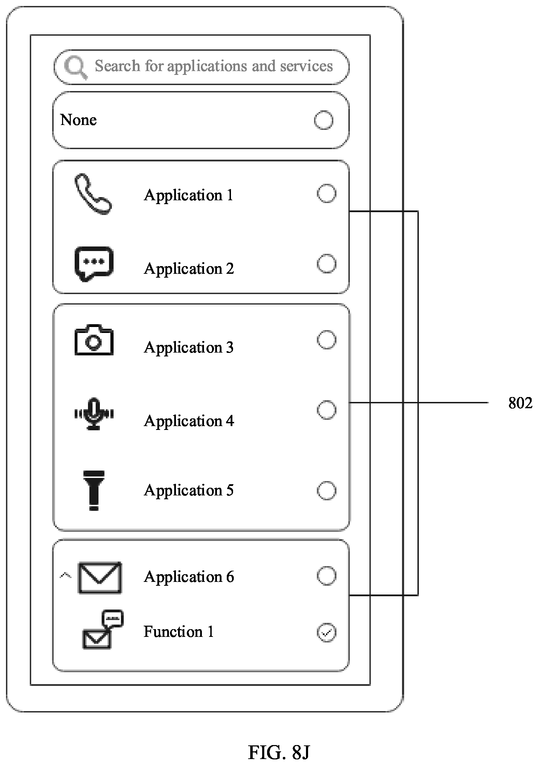

In some embodiments, the candidate application includes a function of the application. The user may select the function of the application from the application list 802 as an application corresponding to the preset fingerprint gesture. For example, as shown in FIG. 8J, in addition to the applications 1 to 6, the application list 802 displays a function 1 of the application 6. The user may choose to directly enable the function 1 of the application 6 by using a fingerprint gesture.

In some embodiments, the candidate application may include: WeChat, WeChat Payment Code, WeChat Transit Code, Alipay, Alipay Payment Code, Alipay Transit Code, Xiaoyi Vision, Xiaoyi Screen Recognition, Flashlight, Camera, Sound Mode, Recorder, Super Privacy, TikTok, Dianping, Bilibili, QQ, DingTalk, DingTalk Check-in, WeCom, WeCom Check-in, and the like. Any electronic device and a third-party application or a function of an application may be used as a candidate application. The user may select a candidate application from the application list as the first application.

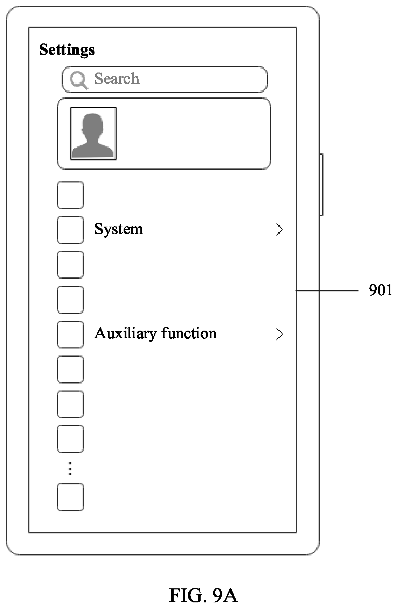

FIG. 9A to FIG. 9D are diagrams of setting interfaces according to an embodiment of this application.

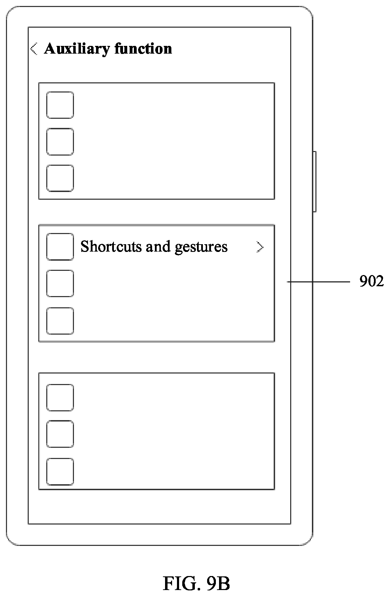

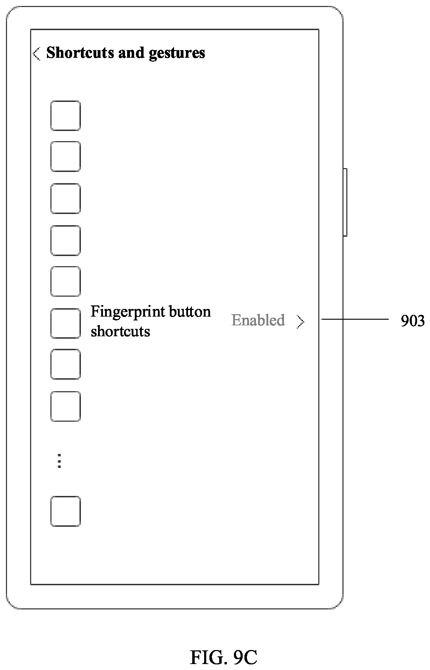

In some embodiments, a user may select an auxiliary function on a setting interface 901 shown in FIG. 9A, to enter the setting interface 902 of the auxiliary function shown in FIG. 9B. A shortcuts and gestures function is selected from a drop-down menu of the setting interface 902 of the auxiliary function, to enter a setting interface 903 of the shortcuts and gestures function shown in FIG. 9C. A fingerprint button shortcut function may be found on the setting interface 903 of the shortcuts and gestures function.

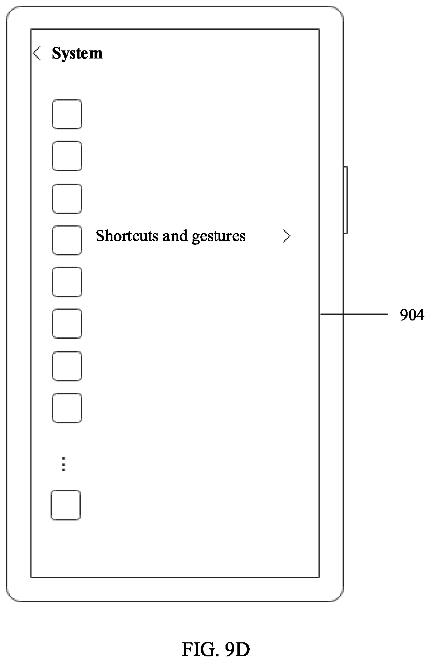

In some other embodiments, the user may select a system on the setting interface 901 shown in FIG. 9A, to enter a setting interface 904 of the system shown in FIG. 9D, and select the shortcuts and gestures function on the setting interface 904 of the system to open the setting interface 903 of the shortcuts and gestures function shown in FIG. 9C. The fingerprint button shortcut function may be found on the setting interface 903 of the shortcuts and gestures function.

In some embodiments, the setting interface 903 of the shortcuts and gestures function further displays, in a row in which the fingerprint button shortcut function is located, a status of a function of quickly starting an application. For example, as shown in FIG. 9C, the function of quickly starting an application is currently enabled.

In some embodiments, when the user selects the fingerprint button shortcut function, the fingerprint gesture setting interface shown in FIG. 3A or the fingerprint setting interface shown in FIG. 3C may be invoked, so that the user may set a correspondence between a preset fingerprint gesture and an application by using the fingerprint gesture setting interface or set a correspondence between a fingerprint and an application by using the fingerprint setting interface.

In some embodiments, when the user selects the fingerprint button shortcut function, the display interface shown in FIG. 8B or FIG. 8C may be invoked. The user enables or disables, by using the switch apparatus shown in 8B or 8C, a function of quickly starting an application. When the user enables the function of quickly starting an application, the user may select, from candidate applications based on the application list 802, an application corresponding to the preset fingerprint gesture.

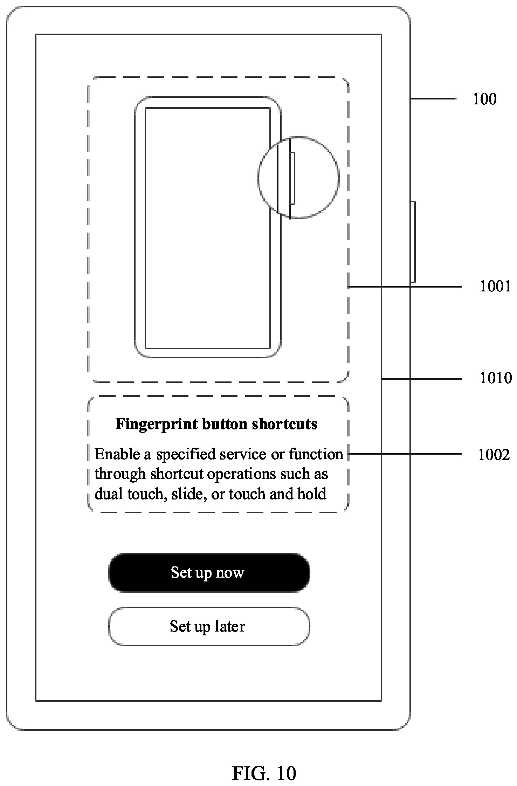

In some embodiments, the electronic device 100 further includes a prompt interface 1010 for setting a fingerprint button shortcut function shown in FIG. 10. The user may view, by using the prompt interface 1010 for setting a fingerprint button shortcut function, a related prompt of the function of quickly starting an application by using a fingerprint gesture, and set the function by following the prompt.

In some embodiments, when the user performs an initial setting on the electronic device 100, the prompt interface 1010 for setting a fingerprint button shortcut function pops up.

In some embodiments, the prompt interface 1010 for setting a fingerprint button shortcut function may include an image display region 1001, and the image display region 1001 may be used to display a location of a fingerprint recognition apparatus on the electronic device 100.

In some embodiments, the image display region 1001 is further used to display a partial enlarged view of the electronic device 100. In the partial enlarged view, the fingerprint recognition component of the electronic device 100 is magnified for display, so that the user finds the fingerprint recognition apparatus at a corresponding location of the electronic device 100.

In some embodiments, the prompt interface 1010 for setting a fingerprint button shortcut function may further include a text prompt region 1002, and the text prompt region 1002 is used to display a shortcut function name and/or a function description. For example, a function of quickly starting an application by using a fingerprint gesture may be referred to as a "Fingerprint button shortcuts" function, and the name is displayed on a shortcut function setting interface. For another example, the text prompt region 1002 may display the following function descriptions "Start a specified application through shortcut operations such as double touch, slide, or touch and hold".

In some embodiments, the prompt interface 1010 for setting a fingerprint button shortcut function further includes a first button and a second button. The first button is a "Set up now" button, and the user may tap the button to set a fingerprint button shortcut function. The second button is a "Set up later" button, and the user taps the button to exit a setting interface of a fingerprint button shortcut function.

In some embodiments, when the user taps the "Set up now" button, the fingerprint gesture setting interface shown in FIG. 3A or the fingerprint setting interface shown in FIG. 3C may be invoked, so that the user sets the correspondence between a preset fingerprint gesture and an application or the correspondence between a fingerprint and an application. In some embodiments, when the user taps the "Set up now" button, the display interface shown in FIG. 8B or FIG. 8C may alternatively be invoked. The user enables or disables, by using the switch apparatus shown in 8B or 8C, a function of quickly starting an application. When the user enables the function of quickly starting an application, the user may select, from candidate applications based on the application list 802, an application corresponding to the preset fingerprint gesture.

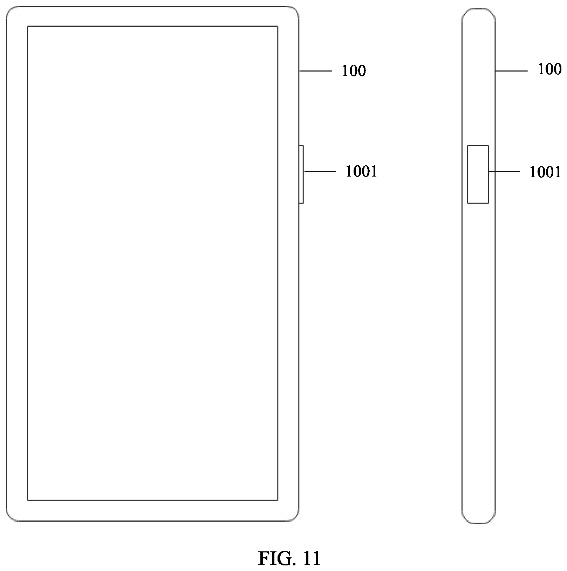

FIG. 11 shows a front view and a side view of an electronic device 100 according to an embodiment of this application.

In some embodiments of this application, as shown in FIG. 11, a fingerprint recognition apparatus 1101 may be disposed on a side surface of the electronic device 100. Disposing the fingerprint recognition apparatus 1101 on the side surface helps a user implement a one-handed operation of starting an application by using a fingerprint gesture. The fingerprint recognition apparatus 1101 in this application may alternatively be disposed at a location such as the front or back of the electronic device 100. This is not specifically limited in this application.

In some embodiments of this application, the fingerprint recognition apparatus 1101 may be integrated into a button, and the fingerprint recognition apparatus 1101 and the button constitute a button having a fingerprint capture function. The fingerprint recognition apparatus 1101 detects a touch of the user on the button, and captures a fingerprint image of a finger that touches the button. In some implementations, the button integrated with the fingerprint recognition apparatus 1101 may be a power button.

In embodiments of this application, fingerprint-based identity verification is performed on the user, and the fingerprint gesture is determined based on the touch operation of the user, to quickly start the application corresponding to the fingerprint gesture. This ensures security and convenience of quickly starting the application, effectively reduces a probability of an accidental touch, and improves accuracy of a user operation, so that the user can start the corresponding application by using the fingerprint gesture, thereby implementing one-step fingerprint authentication and application start, simplifying an operation process, and improving user experience.

With reference to the foregoing embodiment, opening payment code of a payment application is used an example to describe an implementation in which the user quickly enables the payment code of the payment application by using a fingerprint gesture, so that the payment code of the payment application is quickly and conveniently started, thereby facilitating use by the user. If the user wants to configure the payment code of the payment application to be opened by using a dual-touch gesture, the user selects an auxiliary function on a setting interface of the electronic device to invoke a setting interface of the auxiliary function, and selects a shortcuts and gestures function on the setting interface of the auxiliary function to enter a setting interface of the shortcuts and gestures function. The user can find a fingerprint button shortcut function and perform selection on the setting interface of the shortcuts and gestures function. After the fingerprint button shortcut function is selected, the fingerprint gesture setting interface shown in FIG. 3A may be shown. On the fingerprint gesture setting interface, a "Dual-touch gesture" is selected to set an application corresponding to the dual-touch gesture. For example, if the fingerprint gesture 1 shown in FIG. 3A is a dual-touch gesture, an arrow on the right of the application 1 is tapped to set an application for being started by using the dual-touch gesture. If the application 1 is the payment code of the payment application, the user may open the payment code of the payment application by using the dual-touch gesture, without changing a current correspondence. If the application 1 is not the payment code of the payment application, the user may invoke, by tapping an arrow, the application list shown in FIG. 8F. In some embodiments, if a fingerprint gesture is preset in the electronic device, and the fingerprint gesture is a dual-touch gesture, the electronic device may directly display the application list after selecting the fingerprint button shortcut function.

The user may perform a slide-up operation or a slide-down operation to search the application list for the payment code of the payment application and select the payment code. Alternatively, the user may search a search bar for "Payment code of the payment application", "Payment code", "Payment application", or "Payment" by an application name, to screen candidate applications. After screening, the payment code of the payment application is checked from candidate applications displayed in the application list, so that a selection box corresponding to the payment code of the payment application is checked.

By using the foregoing process, the user has set the payment code of the payment application as a first application that can be quickly started by using a dual-touch fingerprint gesture.

When the user needs to open the payment code of the payment application, the finger touches the fingerprint recognition apparatus twice. The fingerprint recognition apparatus detects the touch operation of the user and continuously captures a first fingerprint image and a second fingerprint image. The fingerprint recognition apparatus captures a 1^{st} frame of fingerprint image, and the electronic device performs identity verification on the user based on the 1^{st} frame of fingerprint image. If the identity verification succeeds, the electronic device delivers an unlocking event, and starts to unlock the electronic device. The electronic device determines, based on duration of the continuously captured first fingerprint image and second fingerprint image being separately less than first preset duration of 150 ms, and a time interval between the first fingerprint image and the second fingerprint image being less than second preset duration of 300 ms, that a fingerprint gesture corresponding to the touch operation of the user is the dual-touch gesture. In this case, when the electronic device is unlocked successfully and determines that the fingerprint gesture corresponding to the touch operation of the user is the dual-touch gesture, the payment code of the payment application is opened. In this way, the user quickly opens the payment code of the payment application by using the dual-touch gesture.

In an implementation of quickly starting an application by using the dual-touch fingerprint gesture, the user can flexibly use the fingerprint recognition apparatus. The fingerprint recognition apparatus is dual touched with a finger, so that an application that needs to be used can be started quickly during identity verification, thereby ensuring security and convenience. A function of quickly starting an application by using a fingerprint gesture is applicable to an application with a high security level, for example, a payment function of a payment application.

In some embodiments of this application, determining the fingerprint gesture based on the touch operation of the user may further include: determining whether a proportion of an area of a fingerprint region in a fingerprint image of the touch operation of the user to a total area of the fingerprint image is greater than a first threshold; and when the proportion of the area of the fingerprint region to the total area of the fingerprint image is greater than the first threshold, determining, based on the fingerprint image, the fingerprint gesture corresponding to the touch operation. The fingerprint region is a region in which the finger is in contact with a surface of the fingerprint recognition apparatus when the user touches the fingerprint recognition apparatus with the finger, and the fingerprint region includes a fingerprint of the user. If the area of the fingerprint region is excessively small, it indicates that the user may accidentally touch the fingerprint recognition apparatus. In the foregoing manner, a probability of accidental touch can be reduced, and accuracy of determining the fingerprint gesture can be improved.

In some embodiments of this application, user identity can be verified based on the fingerprint region of the fingerprint image, for example, user identity can be verified based on a fingerprint region of the 1^{st} frame of fingerprint image. In a non-fingerprint region of the fingerprint image, the finger of the user does not contact the fingerprint recognition apparatus, and information related to the user cannot be provided, or even irrelevant information may be introduced. Identity verification on the user based on the fingerprint region can avoid introducing the irrelevant information, thereby improving verification accuracy.

In some embodiments of this application, based on a distance that the touch operation of the user moves on the fingerprint recognition apparatus being less than a second threshold, the duration of the first fingerprint image and the duration of the second fingerprint image being separately less than the first preset duration, and the time interval between the first fingerprint image and the second fingerprint image being less than the second preset duration, the electronic device may further determine that the fingerprint gesture is the dual-touch gesture.

In some implementations of this application, the distance that the touch operation of the user moves on the fingerprint recognition apparatus may be determined based on movement of fingerprint regions of the first fingerprint image and the second fingerprint image.

In some embodiments of this application, the electronic device may further determine, based on a distance that the touch operation of the user moves on the fingerprint recognition apparatus being greater than or equal to a second threshold, that the fingerprint gesture corresponding to the touch operation of the user is not a dual-touch gesture or the touch operation of the user is a misoperation.

When only the dual-touch fingerprint gesture is preset in the electronic device, if the fingerprint gesture corresponding to the touch operation of the user is not the dual-touch fingerprint gesture, it indicates that the operation is definitely a misoperation. The misoperation can be quickly screened out by based on the distance that the touch operation moves on the fingerprint recognition apparatus.

When a plurality of preset fingerprint gestures are set in the electronic device, and the plurality of preset fingerprint gestures include the dual-touch fingerprint gesture, the dual-touch fingerprint gesture may be distinguished from another fingerprint gesture based on the distance that the touch operation moves on the fingerprint recognition apparatus. For example, the plurality of preset fingerprint gestures include the dual-touch fingerprint gesture and a slide fingerprint gesture. If the distance that the touch operation of the user moves on the fingerprint recognition apparatus is greater than or equal to a second threshold, the fingerprint gesture corresponding to the touch operation of the user is not the dual-touch fingerprint gesture, but may be the slide fingerprint gesture.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

A person of ordinary skill in the art may understand that all or a part of the processes of the methods in embodiments may be implemented by a computer program instructing related hardware. The program may be stored in a computer-readable storage medium. When the program runs, the processes of the methods in embodiments are executed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made based on the disclosure of the present invention shall be included in the protection scope of the present invention.

## Claims

1. An electronic device, comprising a fingerprint recognition apparatus, one or more processors, and one or more memories, wherein the one or more memories are coupled to the one or more processors, the one or more memories are configured to store computer program code, the computer program code comprises computer instructions, and when the one or more processors execute the computer instructions, the electronic device is enabled to:
detect a touch operation of a user, and continuously capture a fingerprint image of the user;
perform identity verification and determine a fingerprint gesture of the user, based on the continuously captured fingerprint image; and
start, based on the fingerprint gesture, a first application corresponding to the fingerprint gesture.

2. The electronic device according to claim 1, wherein the fingerprint image comprises a first fingerprint image and a second fingerprint image; and that the electronic device performs identity verification and determines the fingerprint gesture of the user, based on the continuously captured fingerprint image comprises: the electronic device performs identity verification on the user based on the first fingerprint image, and determines, based on the first fingerprint image and the second fingerprint image, that the fingerprint gesture is a dual-touch gesture.

3. The electronic device according to claim 2, wherein the first fingerprint image comprises a 1^{st} frame of fingerprint image; and that the electronic device performs identity verification on the user based on the first fingerprint image comprises: the electronic device performs identity verification on the user based on the 1^{st} frame of fingerprint image.

4. The electronic device according to claim 3, wherein when the one or more processors execute the computer instructions, the electronic device is enabled to: in a process in which the electronic device performs identity verification on the user based on the 1^{st} frame of fingerprint image, continuously capture the first fingerprint image and the second fingerprint image.

5. The electronic device according to claim 3, wherein when the one or more processors execute the computer instructions, the electronic device is enabled to: after determining the fingerprint gesture of the user, perform identity verification on the user based on the 1^{st} frame of fingerprint image.

6. The electronic device according to claim 2, wherein that the electronic device determines, based on the first fingerprint image and the second fingerprint image, that the fingerprint gesture is the dual-touch gesture comprises: the electronic device determines, based on duration of the first fingerprint image, duration of the second fingerprint image, and a time interval between the first fingerprint image and the second fingerprint image, that the fingerprint gesture is the dual-touch gesture.

7. The electronic device according to claim 6, wherein that the electronic device determines, based on the duration of the first fingerprint image, the duration of the second fingerprint image, and the time interval between the first fingerprint image and the second fingerprint image, that the fingerprint gesture is the dual-touch gesture comprises: determining, based on the duration of the first fingerprint image and the duration of the second fingerprint image being separately less than first preset duration, and the time interval between the first fingerprint image and the second fingerprint image being less than second preset duration, that the fingerprint gesture is the dual-touch gesture.

8. The electronic device according to claim 1, wherein the fingerprint gesture comprises any one of a dual-touch gesture, a slide gesture, and a touch-and-hold gesture.

9. The electronic device according to any one of claims 1 to 8, wherein when the one or more processors execute the computer instructions, the electronic device is enabled to unlock a screen of the electronic device after identity verification performed based on the first fingerprint image succeeds.

10. The electronic device according to any one of claims 1 to 9, wherein the fingerprint recognition apparatus is disposed on a side surface of the electronic device.

11. The electronic device according to any one of claims 1 to 10, wherein when the one or more processors execute the computer instructions, the electronic device is enabled to: receive a first operation of the user, and enable a fingerprint gesture function based on the first operation.

12. The electronic device according to claim 11, wherein when the one or more processors execute the computer instructions, the electronic device is enabled to: receive a second operation of the user, and disable the fingerprint gesture function based on the second operation.

13. The electronic device according to claim 11, wherein when the one or more processors execute the computer instructions, the electronic device is enabled to: display a setting interface of the fingerprint gesture function, wherein the setting interface of the fingerprint gesture function comprises an application list; receive a third operation performed by the user on the application list to select the first application; and determine, in response to the third operation of the user, the first application corresponding to the fingerprint gesture.

14. A method for quickly starting an application, applied to an electronic device, wherein the electronic device comprises a fingerprint recognition apparatus, and the method comprises:
detecting, by the fingerprint recognition apparatus, a touch operation of a user, and continuously capturing, by the fingerprint recognition apparatus, a fingerprint image of the user;
performing, by the electronic device, identity verification, and determining a fingerprint gesture of the user, based on the continuously captured fingerprint image; and
starting, by the electronic device based on the fingerprint gesture, a first application corresponding to the fingerprint gesture.

15. The method according to claim 14, wherein the fingerprint image comprises a first fingerprint image and a second fingerprint image; and performing, by the electronic device, identity verification, and determining the fingerprint gesture of the user, based on the continuously captured fingerprint image comprises: performing, by the electronic device, identity verification on the user based on the first fingerprint image, and determining, based on the first fingerprint image and the second fingerprint image, that the fingerprint gesture is a dual-touch gesture.

16. The method according to claim 15, wherein the first fingerprint image comprises a 1^{st} frame of fingerprint image; and performing, by the electronic device, identity verification on the user based on the first fingerprint image comprises: performing, by the electronic device, identity verification on the user based on the 1^{st} frame of image of the 1^{st} frame of fingerprint image.

17. The method according to claim 16, wherein in a process in which the electronic device performs identity verification on the user based on the 1^{st} frame of fingerprint image, the electronic device continuously captures the first fingerprint image and the second fingerprint image.

18. The method according to claim 16, wherein after determining the fingerprint gesture of the user, the electronic device performs identity verification on the user based on the 1^{st} frame of fingerprint image.

19. The method according to claim 15, wherein determining, by the electronic device based on the first fingerprint image and the second fingerprint image, that the fingerprint gesture is the dual-touch gesture comprises: determining, by the electronic device based on duration of the first fingerprint image, duration of the second fingerprint image, and a time interval between the first fingerprint image and the second fingerprint image, that the fingerprint gesture is the dual-touch gesture.

20. The method according to claim 19, wherein determining, by the electronic device based on the duration of the first fingerprint image, the duration of the second fingerprint image, and the time interval between the first fingerprint image and the second fingerprint image, that the fingerprint gesture is the dual-touch gesture comprises: determining, based on the duration of the first fingerprint image and the duration of the second fingerprint image being separately less than first preset duration, and the time interval between the first fingerprint image and the second fingerprint image being less than second preset duration, that the fingerprint gesture is the dual-touch gesture.

21. The method according to claim 14, wherein the fingerprint gesture comprises any one of a dual-touch gesture, a slide gesture, and a touch-and-hold gesture.

22. The method according to any one of claims 14 to 21, wherein the method further comprises:
unlocking, by the electronic device, a screen of the electronic device after identity verification performed based on the first fingerprint image succeeds.

23. The method according to any one of claims 14 to 22, wherein the fingerprint recognition apparatus is disposed on a side surface of the electronic device.

24. The method according to any one of claims 14 to 23, wherein the method further comprises:
receiving, by the electronic device, a first operation of the user, and enabling a fingerprint gesture function based on the first operation.

25. The method according to claim 24, wherein the method further comprises:
receiving, by the electronic device, a second operation of the user, and disabling the fingerprint gesture function based on the second operation.

26. The method according to claim 24, wherein the method further comprises:
displaying, by the electronic device, a setting interface of the fingerprint gesture function, wherein the setting interface of the fingerprint gesture function comprises an application list; and
receiving, by the electronic device, a third operation performed by the user on the application list to select the first application, and determining, in response to the third operation of the user, the first application corresponding to the fingerprint gesture.

27. A computer storage medium, wherein the computer storage medium stores instructions, and when the instructions are run on an electronic device, the electronic device is enabled to perform the method according to any one of claims 14 to 26.

28. A computer program product comprising instructions, wherein when the computer program product runs on an electronic device, the electronic device is enabled to perform the method according to any one of claims 14 to 26.
